# EUROPEAN PATENT APPLICATION

(11) **EP 4 818 416 A1**
(43) Date of publication of application: **07.10.2026**
(21) Application number: 26167206.7
(22) Date of filing: 24.03.2026
(51) Int. Cl.: E02F 9/16, B60R 21/13

(54) **WORKING MACHINE**

(30) Priority: 31.03.2025 JP 2025058092
(71) Applicant: KUBOTA CORPORATION, Osaka-shi, Osaka 530-0011 (JP)
(72) Inventor: GOTO, Rigen, Sakai-shi, OSAKA, 5900908 (JP); SHIGA, Takayuki, Sakai-shi, OSAKA, 5900908 (JP)
(74) Representative: Müller-Boré & Partner Patentanwälte PartG mbB

(57) **Abstract**

A working machine (1) includes a traveling device (10), a swivel body (2A) to be supported on the traveling device (10) such that the swivel body (2A) is turnable about a vertical axis, an operator's seat (4) provided on the swivel body (2A), a protection structure (6) movable between an enabled state in which the protection structure (6) is enabled to protect an operator sitting in the operator's seat (4), and a disabled state other than the enabled state, and a first detector (80) to detect the enabled state and the disabled state of the protection structure (6).

## Description

### BACKGROUND OF THE INVENTION

### Field of the Invention

The present invention relates to working machines such as backhoes.

### Description of the Related Art

Japanese Unexamined Patent Publication No. 2020-79008 discloses a working vehicle (tractor) in which a ROPS (roll-over protective structure) to protect an operator extends upward from the vehicle body. The ROPS is dividedly formed by a lower-side divided body located close to the vehicle body and an upper-side divided body located upward, and has a structure in which the upper-side divided body is rotatably supported between a vertical working position and a folding position bending downward relative to the lower-side divided body. The vertical working position of the ROPS is a state (enabled state) in which the operator is protected. In contrast, the folding position of the ROPS is a state (disabled state) in which the operator cannot be protected.

### SUMMARY OF THE INVENTION

In the working vehicle of Japanese Unexamined Patent Publication No. 2020-79008, the protection structure (ROPS) is movable between the vertical working position and the folding position, but the state (the vertical working position or the folding position) of the protection structure cannot be detected, thus situation cannot be handled according to an enabled state (vertical working position) and a disabled state (folding position) of the protection structure.

Example embodiments of the present invention have been devised to solve such an issue in the related art, and it is an object to provide a working machine that can respond according to an enabled state of the protection structure and respond according to a disabled state of the protection structure.

A working machine according to an example embodiment of the present invention includes a traveling device, a swivel body to be supported on the traveling device such that the swivel body is turnable about a vertical axis, an operator's seat provided on the swivel body, a protection structure movable between an enabled state in which the protection structure is enabled to protect an operator sitting in the operator's seat, and a disabled state other than the enabled state, and a first detector to detect the enabled state and the disabled state of the protection structure.

The above-described working machine can handle the situation according to the enabled state and the disabled state of the protection structure.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1A is a side view of a working machine.
FIG. 1B is a plan view of the working machine.
FIG. 2 is a schematic configuration diagram of a hydraulic system and a control system of the working machine.
FIG. 3A is a side view illustrating a protection structure in an enabled state.
FIG. 3B is a plan view illustrating the protection structure in an enabled state.
FIG. 3C is a perspective view illustrating the protection structure in an enabled state.
FIG. 4A is a cross-sectional view of an upper end portion of a lower pipe and a lower end portion of an upper pipe in the protection structure.
FIG. 4B is an exploded perspective view of a first supporting body of the lower pipe and a second supporting body of the upper pipe.
FIG. 5 is an enlarged perspective view of an area including a hinge portion of the protection structure in an enabled state.
FIG. 6 is an enlarged side view of an area including the hinge portion of the protection structure in a disabled state.
FIG. 7 is a rear view of a connecting (coupling) point between the lower pipe and the upper pipe on the left side of the protection structure.
FIG. 8A is a diagram illustrating an example of turning on a switch by a controller when the protection structure is in an enabled state.
FIG. 8B is a diagram illustrating an example of turning off a switch by the controller when the protection structure is in a disabled state.
FIG. 9 is a front view of an operator's seat including a seat belt device, a manual operator and the like.
FIG. 10 is a diagram illustrating an example of conditions for determination of whether a prime mover can be started, based on the state of the protection structure and a safety device.
FIG. 11A is a view illustrating an example of a first notification provided by a notifier.
FIG. 11B is a view illustrating an example of a second notification provided by the notifier.
FIG. 12 is a flowchart illustrating an example of control at the start of a prime mover.
FIG. 13 is a diagram illustrating an example of conditions for determination to continue or stop the operation of the prime mover based on the state of the protection structure and the safety device.
FIG. 14 is a flowchart illustrating an example of control during operation of a prime mover.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings.

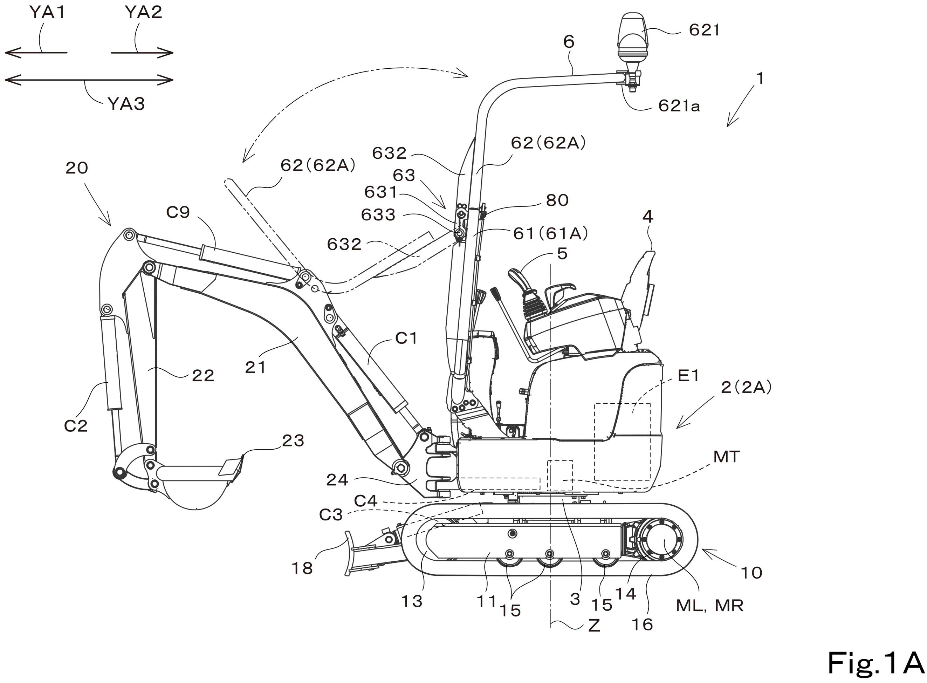

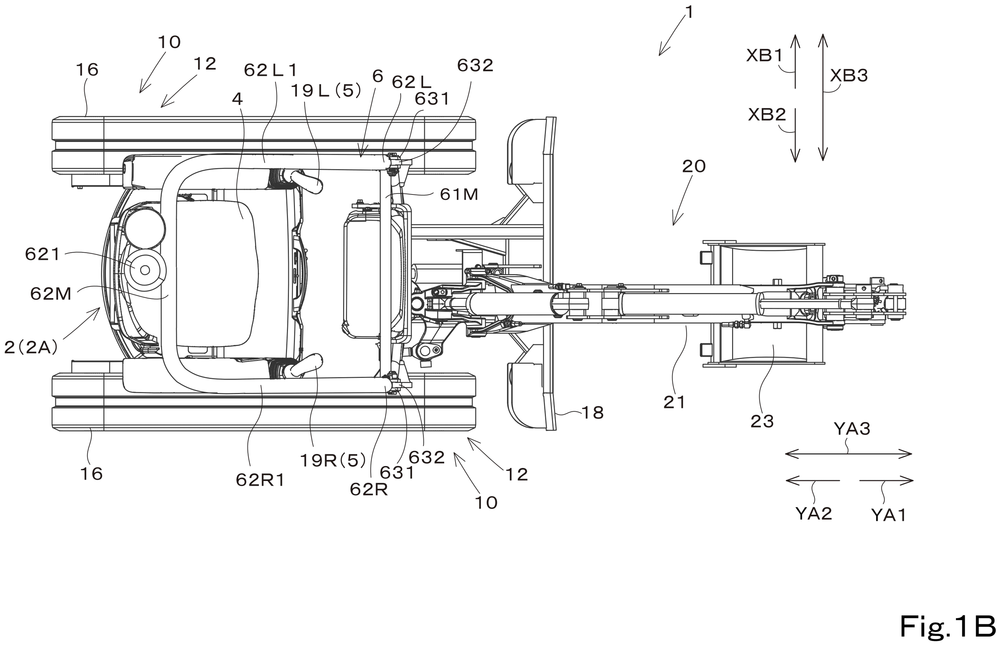

First, the entire configuration of a working machine 1 will be described. FIG. 1A is a side view of the working machine 1. FIG. 1B is a plan view of the working machine 1.

As illustrated in FIG. 1A and FIG. 1B, the working machine 1 in one or more example embodiments is a slewing working machine (so-called backhoe). The working machine 1 includes a machine body 2 (swivel body 2A), a traveling device 10 to cause the machine body 2 to travel, and a working device 20 provided on the machine body 2. An operator's seat 4 on which an operator sits, and a protection structure 6 (or a protective structure 6) to protect a worker (operator) sitting on the operator's seat 4 are provided on the machine body 2.

The protection structure 6 is, for example, a roll-over protection structure, so-called ROPS. For example, as illustrated in FIG. 1A, the protection structure 6 is a front ROPS. The front ROPS has a structure such that in a side view of the machine body 2, an upper end portion of a pillar extending upward from a front position of the machine body 2 bends rearward and extends over the operator's seat 4. Note that the protection structure 6 may be a back ROPS (rear ROPS) or the like. For example, the back ROPS (rear ROPS) has a structure such that in a side view of the machine body 2, an upper end portion of a pillar extending upward from a rear position of the machine body 2 bends forward and extends over the operator's seat 4. Alternatively, the protection structure 6 may be TOPS (Tip-Over Protective Structures), or FOPS (Falling-Object Protective Structures).

The periphery of the operator's seat 4 is provided with a manual operator 5 to operate the working machine 1. An operator sitting on the operator's seat 4 can operate the manual operator 5.

In the present example embodiment, the direction in which the operator (worker) sitting on the operator's seat 4 faces is forward (the direction of arrow YA1 in FIG. 1A and FIG. 1B), and the opposite direction (the direction of arrow YA2 in FIG. 1A, FIG. 1B and the like) is rearward. The left side (the near side in FIG. 1A, the direction of arrow XB1 in FIG. 1B) of the operator is leftward, and the right side (the far side in FIG. 1A, the direction of arrow XB2 in FIG. 1B) of the operator is rightward. The horizontal direction perpendicular to the front-rear direction YA3 is the width direction XB3 (see FIG. 1B). The direction toward the right or left from the central portion of the machine body 2 in the width direction XB3 is outward in the width direction.

The traveling device 10 causes the machine body 2 to travel, and includes a traveling frame 11 and a traveling structure 12. The traveling frame 11 (track frame) has a structure in which the periphery thereof is mounted with the traveling structure 12, and the machine body 2 is supported on an upper portion thereof.

The traveling structure 12 is, e.g., a crawler traveling structure. The traveling structure 12 is provided on each of the left side and the right side of the traveling frame 11. The traveling structure 12 includes an idler 13, a drive wheel 14, a plurality of track rollers 15, an endless crawler belt 16, and traveling motors (a left traveling motor ML and a right traveling motor MR).

The idler 13 is located in the front of the traveling frame 11. The drive wheel 14 is located in the rear of the traveling frame 11. The plurality of track rollers 15 are provided between the idler 13 and the drive wheel 14. The crawler belt 16 is wound around the idler 13, the drive wheel 14, and the track rollers 15.

The left traveling motor ML is included in the traveling structure 12 on the left side of the traveling frame 11. The right traveling motor MR is included in the traveling structure 12 on the right side of the traveling frame 11. The left traveling motor ML and the right traveling motor MR are each a hydraulic motor. In each traveling structure 12, the drive wheel 14 is rotationally driven by the power of the left traveling motor ML and the right traveling motor MR, and the crawler belt 16 is circulated in a circumferential direction.

A dozer unit 18 is mounted on the front of the traveling device 10. The dozer unit 18 is swung up and down by expansion and contraction of a dozer cylinder C3. The dozer cylinder C3 is mounted on the traveling frame 11. The dozer cylinder C3 is a hydraulic cylinder.

The machine body 2 is supported pivotably on the traveling frame 11 through a slewing bearing 3 about a swivel axis Z which is a vertical axis extending in an up-down direction. A swivel motor MT is a hydraulic motor (a hydraulic actuator included in hydraulic equipment). The machine body 2 pivots about the swivel axis Z by the power of the swivel motor MT.

The working device 20 is provided in the machine body 2. For example, the working device 20 is supported at the front of the machine body 2. The working device 20 includes a boom 21, an arm 22, a bucket 23, and a hydraulic actuator (a boom cylinder C1, a bucket cylinder C2, the dozer cylinder C3, a swing cylinder C4, and an arm cylinder C9). The base end of the boom 21 is supported by a swing bracket 24 rotatably about a lateral axis (an axis extending in the width direction XB3 of the machine body 2). Thus, the boom 21 is swingable in an up-down direction. The arm 22 is supported on the end of the boom 21 rotatably about a lateral axis. Thus, the arm 22 is swingable in the front-rear direction or the up-down direction.

The boom cylinder C1 is a boom drive unit that rotates the boom 21 about a lateral axis. The arm cylinder C9 is an arm drive unit that rotates the arm 22 about a lateral axis. The bucket cylinder C2 is a working tool drive unit that rotates the bucket 23 (working tool) about a lateral axis.

Instead of the bucket 23, another working tool (hydraulic attachment) drivable by the hydraulic actuator can be attached to the working machine 1. As the other working tools, a tilt rotator, a hydraulic breaker, a hydraulic crusher, an angle broom, an earth auger, a pallet fork, a sweeper, a mower, a snow blower, a grapple and the like may be mentioned.

The swing bracket 24 is rotated about a vertical axis by expansion and contraction of the swing cylinder C4 provided in the machine body 2, and thus swings from side to side. The boom 21 swings up and down (front and rear) by expansion and contraction of the boom cylinder C1. The arm 22 swings up and down (front and rear) by expansion and contraction of the arm cylinder C9. The bucket 23 swings up and down (front and rear) by expansion and contraction of the bucket cylinder C2. The swing cylinder C4, the boom cylinder C1, the arm cylinder C9, and the bucket cylinder C2 are each a hydraulic cylinder.

As illustrated in FIG. 1A, the working machine 1 includes a prime mover E1 to supply the traveling device 10 and the working device 20 with power. The prime mover E1 is a diesel engine. Note that the prime mover E1 may be a gasoline engine, an LPG engine or an electric motor, or may be a hybrid prime mover including an engine and an electric motor.

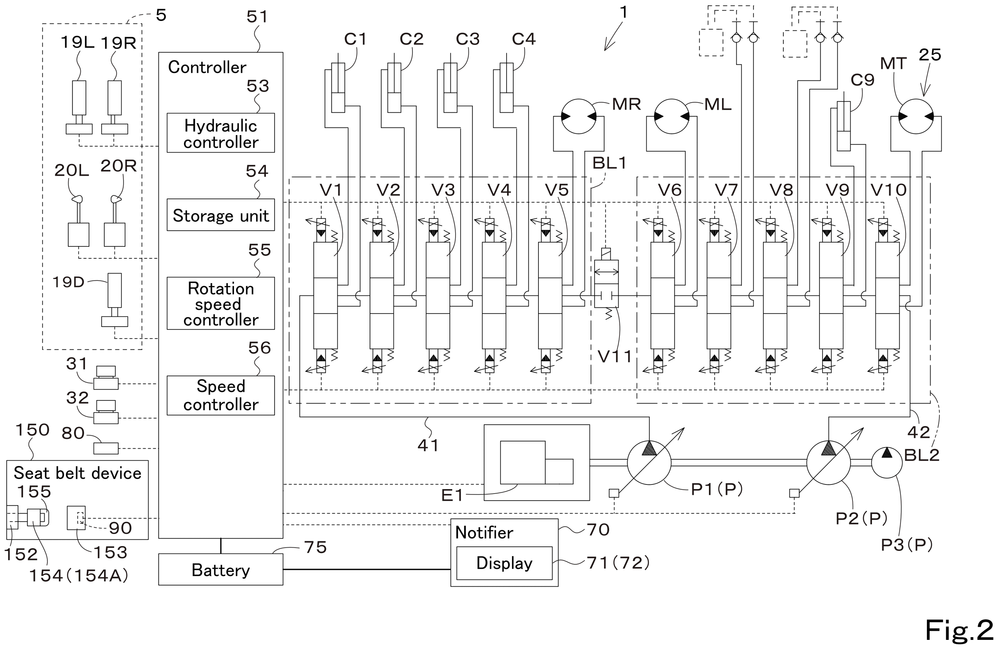

FIG. 2 is a schematic configuration diagram of a hydraulic system and a control system of the working machine 1. As illustrated in FIG. 2, the working machine 1 includes a hydraulic pump P to be driven by the power from the prime mover E1. The traveling device 10 and the working device 20 are configured to be driven based on the hydraulic fluid from the hydraulic pump P.

Specifically, as illustrated in FIG. 2, the hydraulic system of the working machine 1 includes three hydraulic pumps P (a first hydraulic pump P1, a second hydraulic pump P2, and a third hydraulic pump P3), and a plurality of control valves V1 to V10. The first hydraulic pump P1 and the second hydraulic pump P2 are each a variable displacement hydraulic pump. The third hydraulic pump P3 is a fixed displacement hydraulic pump. The first hydraulic pump P1, the second hydraulic pump P2, and the third hydraulic pump P3 are driven by the power of the prime mover E1, and deliver the hydraulic fluid stored in a hydraulic fluid tank. In the present example embodiment, the hydraulic system of the working machine 1 includes three hydraulic pumps P (the first hydraulic pump P1, the second hydraulic pump P2, and the third hydraulic pump P3), but the number of pumps is not limited.

The plurality of control valves V1 to V10 are each a valve (solenoid control valve) to control the flow rate of the hydraulic fluid to be supplied to hydraulic actuators (a working hydraulic actuator and a traveling hydraulic actuator). The plurality of control valves V1 to V10 are each a 3-position solenoid switching valve in which the position of a spool is switched by the hydraulic fluid (pilot oil) supplied from the third hydraulic pump P3. Specifically, the plurality of control valves V1 to V10 each include a solenoid valve, and the pressure of the pilot oil to be applied to the spool is changed by the opening of the solenoid valve, thus the position of the spool can be changed. Note that in the present example embodiment, a 3-position solenoid switching valve with a solenoid valve built-in has been illustrated, but the solenoid valve may be configured as a separate component. The plurality of control valves V1 to V10 may be a 2-position switching valve or a 4-position switching valve other than the 3-position switching valve, and are not limited to a specific one.

The boom control valve V1 controls the boom cylinder C1. The bucket control valve V2 controls the bucket cylinder C2. The dozer control valve V3 controls the dozer cylinder C3. The swing control valve V4 controls the swing cylinder C4. The right traveling control valve V5 controls the traveling hydraulic actuator (the right traveling motor MR) of the first traveling device 10R. The left traveling control valve V6 controls the traveling hydraulic actuator (the left traveling motor ML) of the second traveling device 10L. The first spare control valve V7 controls a spare actuator. The second spare control valve V8 controls the spare actuator. The arm control valve V9 controls the arm cylinder C9. The swivel control valve V10 controls the swivel motor MT.

The boom control valve V1, the bucket control valve V2, the dozer control valve V3, the swing control valve V4 and the right traveling control valve V5 are connected to a first delivery fluid passage 41 which is connected to the first hydraulic pump P1. The left traveling control valve V6, the first spare control valve V7, the second spare control valve V8, the arm control valve V9 and the swivel control valve V10 are connected to a second delivery fluid passage 42 which is connected to the second hydraulic pump P2.

Hereinafter, for the purpose of illustration, the group of the control valves V1 to V5 may be referred to as a first block BL1, and the group of the control valves V6 to V10 may be referred to as a second block BL2.

A communication valve V11 is provided between the first block BL1 and the second block BL2. The communication valve V11 is a switching valve to be switched to a first position and a second position, which are connected to the first delivery fluid passage 41 and the second delivery fluid passage 42, respectively. When the communication valve V11 is in the first position, the first delivery fluid passage 41 and the second delivery fluid passage 42 are connected through the communication valve V11, and when the communication valve V11 is in the second position, the first delivery fluid passage 41 and the second delivery fluid passage 42 are disconnected by the communication valve V11. Note that the communication valve V11 may be a 3-position switching valve or a 4-position switching valve other than a 2-position switching valve, and is not limited to a specific one. Note that the hydraulic system of the working machine 1 may adopt a configuration in which the communication valve V11 is not provided.

The working machine 1 includes a swivel device 25 (see FIG. 2). The swivel device 25 includes the slewing bearing 3, the swivel motor MT, and the hydraulic pump P (the first hydraulic pump P1 and the second hydraulic pump P2).

Next, the configuration of the control system of the working machine 1 will be described using FIG. 2. As illustrated in FIG. 2, the control system of the working machine 1 includes a controller 51 to control the operation of the working machine 1. The controller 51 includes a CPU (processor), an electronic and electrical circuit, a program and the like.

The controller 51 includes a hydraulic controller 53 to control the hydraulic system. The hydraulic controller 53 is a working controller to control the hydraulic system of the working device 20 and the traveling device 10. The hydraulic controller 53 includes a CPU (processor), an electronic and electrical circuit, a program and the like which are provided in the controller 51. The hydraulic controller 53 controls the hydraulic equipment provided in the working machine 1, for example, the plurality of control valves V1 to V10, the communication valve V11, and the hydraulic pump P (the first hydraulic pump P1 and the second hydraulic pump P2). Note that the hydraulic controller 53 may be any controller that controls the hydraulic equipment, and the object to be controlled is not limited to that in the present example embodiment.

The controller 51 is connected to the manual operator 5. The manual operator 5 includes work operation members (a work operation member 19L, a work operation member 19R, and a work operation member 19D), and traveling operation members (a traveling operation member 20L and a traveling operation member 20R).

The work operation member 19L is located at a position which allows the operator (worker) to operate it by the left hand, the work operation member 19R is located at a position which allows the operator to operate it by the right hand, and separately from the work operation member 19R, the work operation member 19D is located at a position which allows the operator to operate it by the right hand on the right side of the operator's seat 4. The work operation member 19L and the work operation member 19R are each a lever including a potentiometer (detector) to detect an amount of swing (amount of operation), the lever being swingable to the front, rear, right, and left. The work operation member 19D is a lever including a potentiometer (detector) to detect an amount of swing (amount of operation), the lever being swingable to the front and rear.

For example, when being swung in the front-rear direction, the work operation member 19L functions as an arm operation member, and when being swung in the left-right direction, the work operation member 19L functions as a swivel operation member. For example, when being swung in the front-rear direction, the work operation member 19R functions as a boom operation member, and when being swung in the left-right direction, the work operation member 19R functions as a bucket operation member.

When an operator operates the work operation member 19L, an amount of operation and an operation direction of the work operation member 19L are detected by a potentiometer, and the detected amount of operation and operation direction are input to the controller 51. The hydraulic controller 53 energizes the solenoid of the swivel solenoid valve of the swivel control valve V10 to control the opening of the swivel solenoid valve, or energizes the solenoid of the arm solenoid valve of the arm control valve V9 to control the opening of the arm solenoid valve according to the amount of operation and operation direction of the work operation member 19L. As a result, a pilot pressure is applied to a pressure receiver of the swivel control valve V10 to switch the position of the swivel control valve V10, and the rotation direction of the swivel motor MT is switched according to the position, or a pilot pressure is applied to a pressure receiver of the arm control valve V9 to switch the position of the arm control valve V9, and the arm cylinder C9 expands or contracts according to the position.

When an operator operates the work operation member 19R, the amount of operation and operation direction of the work operation member 19R are detected by a potentiometer, and the detected amount of operation and operation direction are input to the controller 51. The hydraulic controller 53 energizes the solenoid of the boom solenoid valve of the boom control valve V1 to control the opening of the boom solenoid valve according to the amount of operation and operation direction of the work operation member 19R, or energizes the solenoid of the bucket solenoid valve of the bucket control valve V2 to control the opening of the bucket solenoid valve according to the amount of operation and operation direction of the work operation member 19R. As a result, a pilot pressure is applied to a pressure receiver of the boom control valve V1 to switch the position of the boom control valve V1, and the boom cylinder C1 expands or contracts according to the position, or a pilot pressure is applied to a pressure receiver of the bucket control valve V2 to switch the position of the bucket control valve V2, and the bucket cylinder C2 expands or contracts according to the position.

When an operator operates the work operation member 19D, the amount of operation and operation direction of the work operation member 19D are detected by a potentiometer, and the detected amount of operation and operation direction are input to the controller 51. The hydraulic controller 53 energizes the solenoid of the dozer solenoid valve of the dozer control valve V3 to control the opening of the dozer solenoid valve according to the amount of operation and operation direction of the work operation member 19D. As a result, a pilot pressure is applied to a pressure receiver of the dozer control valve V3 to switch the position of the dozer control valve V3, and the dozer cylinder C3 expands or contracts according to the position.

As described above, the machine body 2, the boom 21, the arm 22, the bucket 23 (only for swinging), and the dozer unit 18 can be operated by operating the work operation members (the work operation member 19L, the work operation member 19R, and the work operation member 19D).

The controller 51 is connected to the traveling operation members (the traveling operation member 20L and the traveling operation member 20R). The traveling operation member 20L and the traveling operation member 20R are located in front of the operator's seat 4. The traveling operation member 20L and the traveling operation member 20R are each a lever including a potentiometer (detector) to detect an amount of swing (amount of operation), the lever being swingable to the front and rear. Note that the traveling operation member 20L and the traveling operation member 20R are not limited to a lever, and may be, e.g., a pedal.

When an operator operates the traveling operation member 20L and the traveling operation member 20R, the amount of operation and operation direction of the traveling operation member 20L and the traveling operation member 20R are detected by a potentiometer, and the detected amount of operation and operation direction are input to the controller 51. The hydraulic controller 53 energizes the solenoid of the left traveling solenoid valve of the left traveling control valve V6 according to the amount of operation and operation direction of the traveling operation member 20L, and energizes the solenoid of the right traveling solenoid valve of the right traveling control valve V5 according to the amount of operation and operation direction of the traveling operation member 20R. As a result, a pilot pressure is applied to a pressure receiver of the right traveling control valve V5 and the left traveling control valve V6 to switch each of the right traveling control valve V5 and the left traveling control valve V6, and the rotation directions of the right traveling motor MR and the left traveling motor ML are determined.

As described above, when the work operation members (the work operation member 19L, the work operation member 19R, and the work operation member 19D) and the traveling operation members (the traveling operation member 20L and the traveling operation member 20R) are operated, the controller 51 can control the machine body 2, the boom 21, the arm 22, the bucket 23, and the dozer unit 18, the first traveling device 10R and the second traveling device 10L by outputting a control signal to energize or deenergize each solenoid.

As illustrated in FIG. 2, the working machine 1 includes a notifier 70. The notifier 70 includes, e.g., a display 71. The display 71 includes a display portion 72, and can display information on the working machine 1 and information on notification to the operator. The display portion 72 includes a panel such as a liquid crystal panel. Alternatively, the display portion 72 may include a touch panel, and can receive a touch input operation from an operator or the like. The notifier 70 may include an audio output device such as a speaker. The display 71 may be a meter panel, an instrument panel and the like.

The working machine 1 includes a battery 75 to supply electric power to electrical equipment such as the controller 51 and the notifier 70.

The controller 51 is connected to a first setting member 31 and a second setting member 32. The first setting member 31 is a member (member that sets the number of revolutions (rotation speed) of the prime mover E1) that receives selection related to setting of the number of revolutions for the prime mover E1. The second setting member 32 is a member (member that sets the speed of the hydraulic actuator) that receives selection related to speed setting of the hydraulic actuator. The controller 51 includes a rotation speed controller 55, a speed controller 56, and a storage unit (memory and/or storage) 54.

The storage unit 54 is a non-volatile memory or the like, and stores various information (such as a program and data) related to the control of the controller 51. For example, the storage unit 54 is, e.g., an HDD (Hard Disk Drive), an SSD (Solid State Drive) and the like.

The rotation speed controller 55 includes a CPU (processor), an electronic and electrical circuit, a program and the like which are provided in the controller 51. The rotation speed controller 55 sets the number of revolutions of the prime mover E1 based on an operation signal of the first setting member 31. That is, the rotation speed controller 55 increases or decreases the number of revolutions of the prime mover E1 based on an operation of the first setting member 31.

The speed controller 56 includes a CPU (processor), an electronic and electrical circuit, a program and the like which are provided in the controller 51, and sets the working speed based on an operation signal input from the first setting member 31 and the second setting member 32. The speed controller 56 provides control signals to energize the solenoid valves of the control valves V1 to V10 to control the control valves V1 to V10 based on the working speed read from the storage unit 54, the control signals corresponding to the amounts of operation of the work operation members 19L, 19R, and 19D. Specifically, the speed controller 56 controls the maximum speeds of the hydraulic actuators connected to the control valves V1 to V10 by changing the opening of the control valves V1 to V10.

Here, the protection structure 6 will be described in detail using the drawings. The protection structure 6 is movable between an enabled state (see the protection structure 6 indicated by a solid line in FIG. 1A) in which the protection structure 6 is enabled to protect the operator sitting in the operator's seat 4 and a disabled state (see the protection structure 6 indicated by a dash-dot-dot line in FIG. 1A) other than the enabled state.

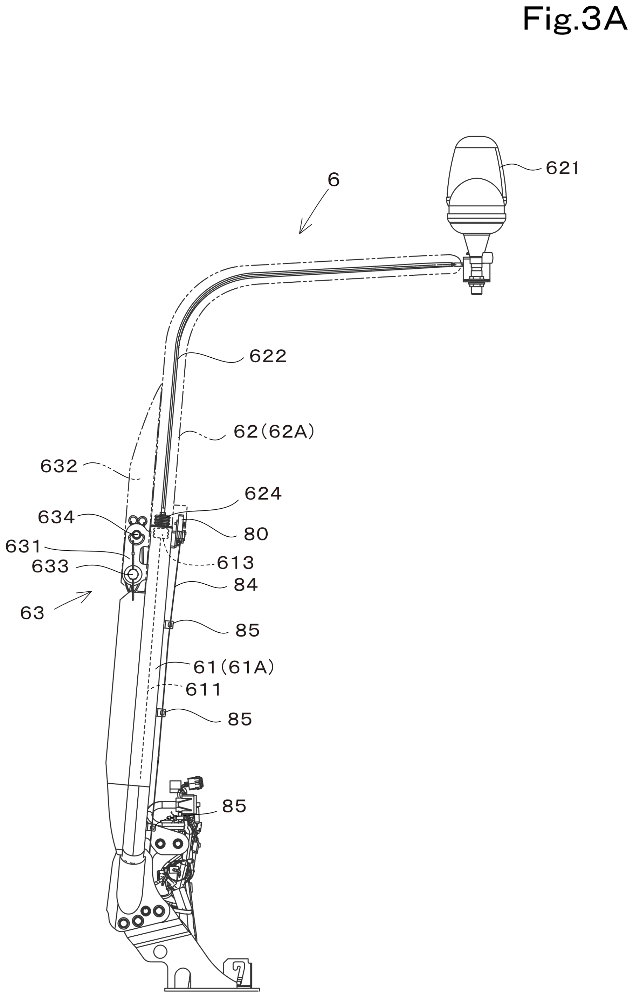

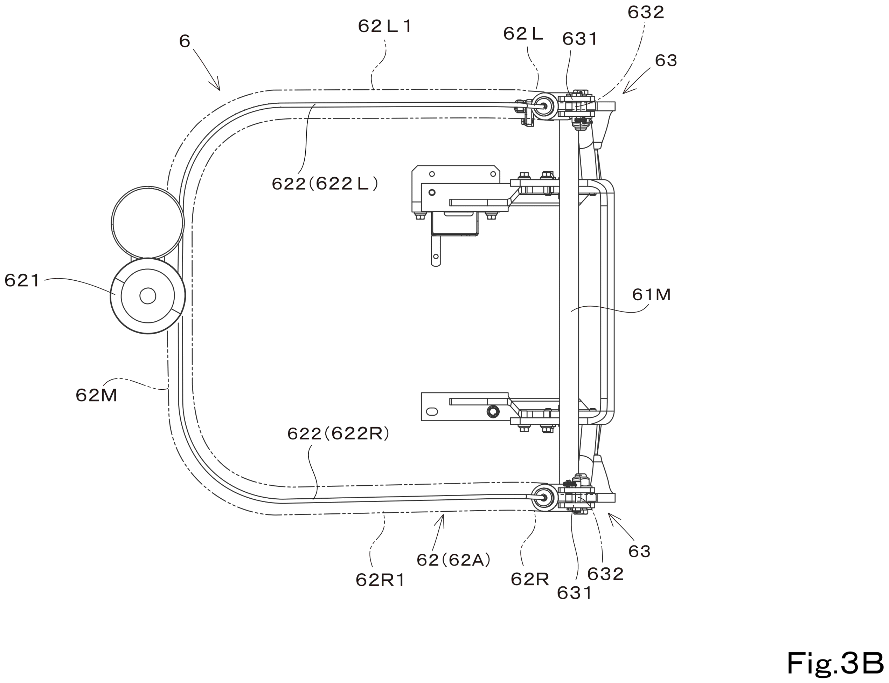

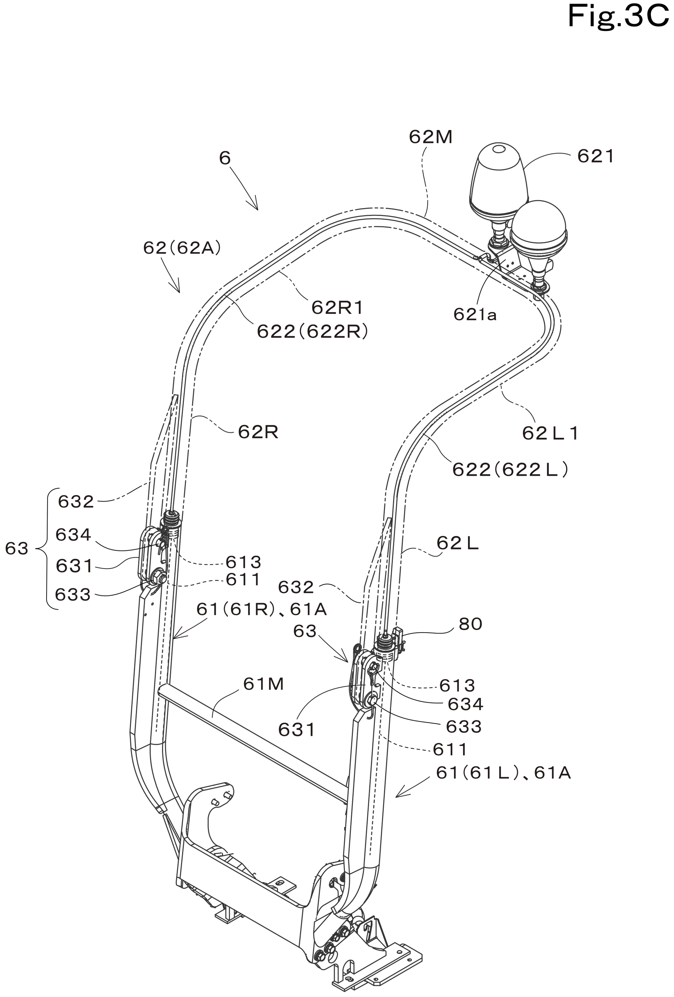

FIG. 3A is a side view illustrating the protection structure 6 in the enabled state. FIG. 3B is a plan view illustrating the protection structure 6 in the enabled state. FIG. 3C is a perspective view illustrating the protection structure 6 in the enabled state. In FIG. 3A to FIG. 3C, an upper pipe 62 is indicated by a dash-dot-dot line, so that a second electric wire 622 in the upper pipe 62 is clearly illustrated. As illustrated in FIG. 3A and FIG. 3C, the protection structure 6 includes a lower pipe 61 extending upward from the machine body 2 (swivel body 2A), the upper pipe 62 located at an upper portion of the lower pipe 61, and a hinge portion 63 (rotating structure) to support the upper pipe 62 rotatably relative to the lower pipe 61.

As illustrated in FIG. 3C, the lower pipe 61 includes a left lower pipe 61L and a right lower pipe 61R extending upward from a front position of the machine body 2 and being spaced in the width direction XB3 of the machine body 2. The left lower pipe 61L and the right lower pipe 61R are supported by a support pipe 61M which extends in the width direction XB3 of the machine body 2.

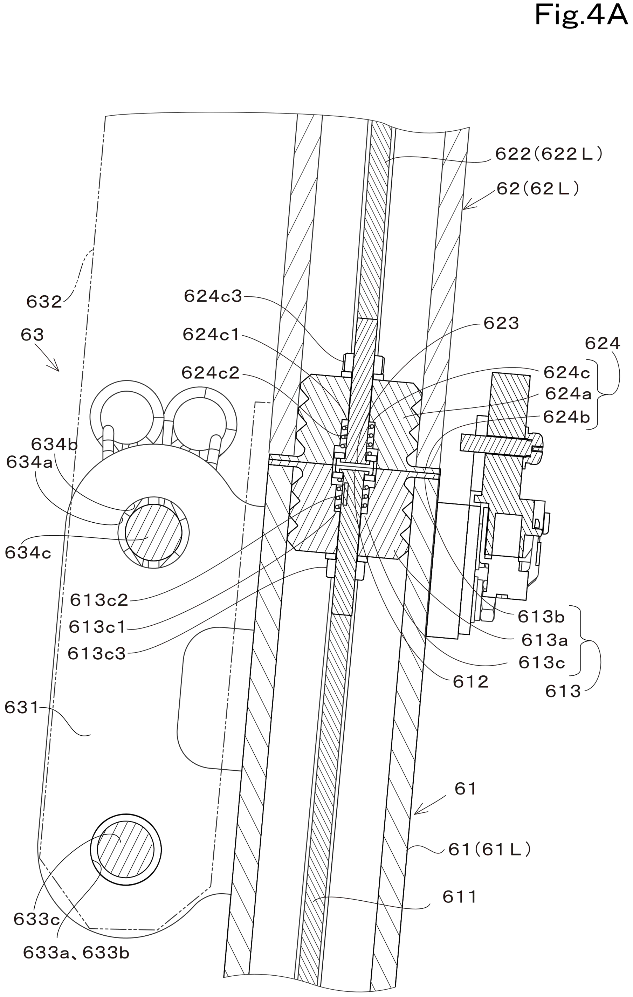

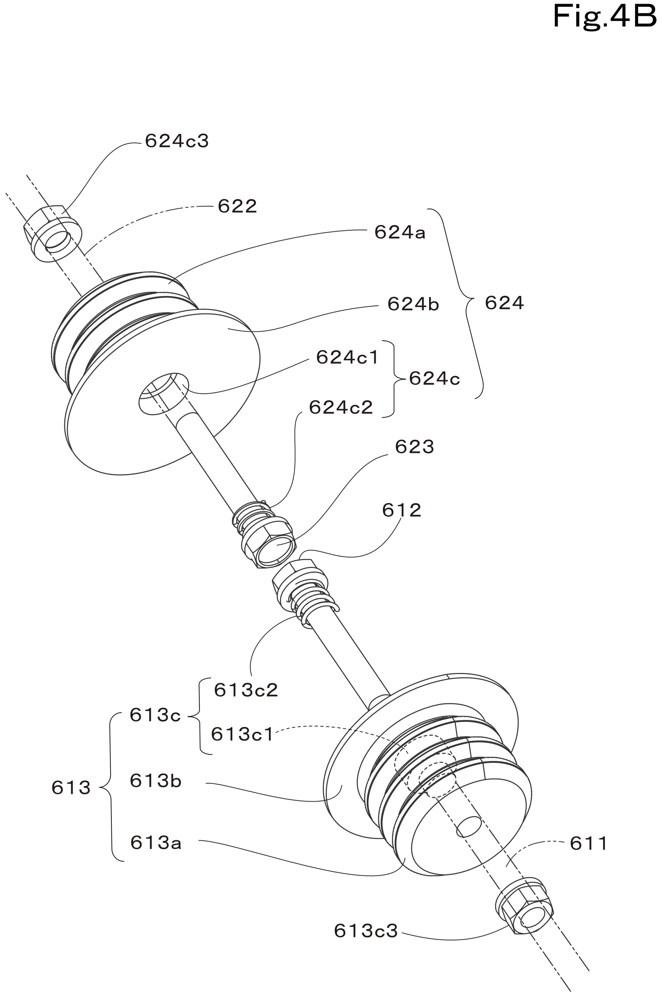

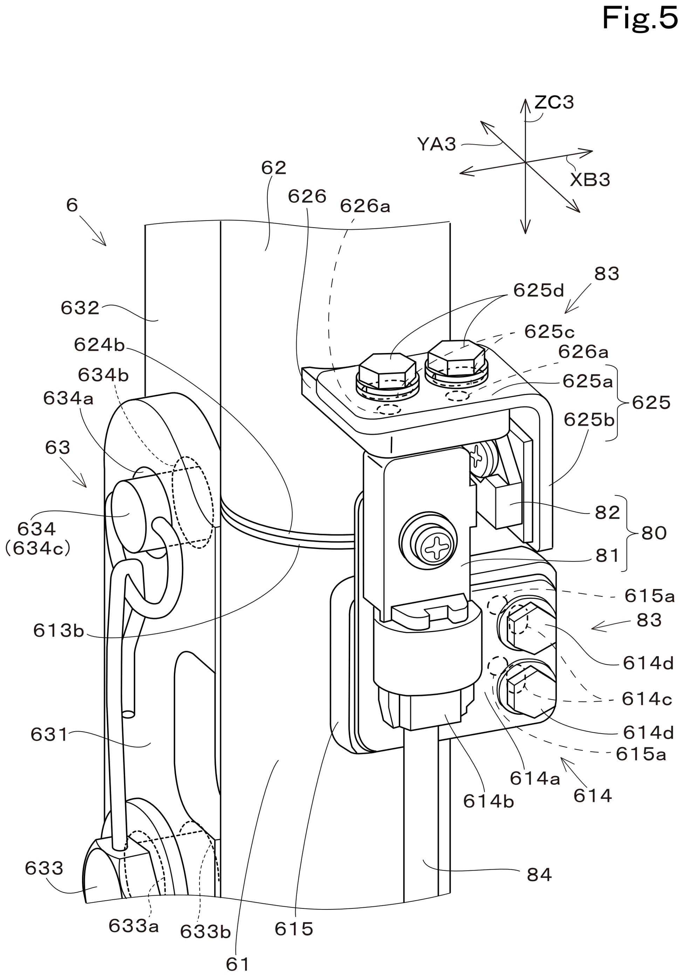

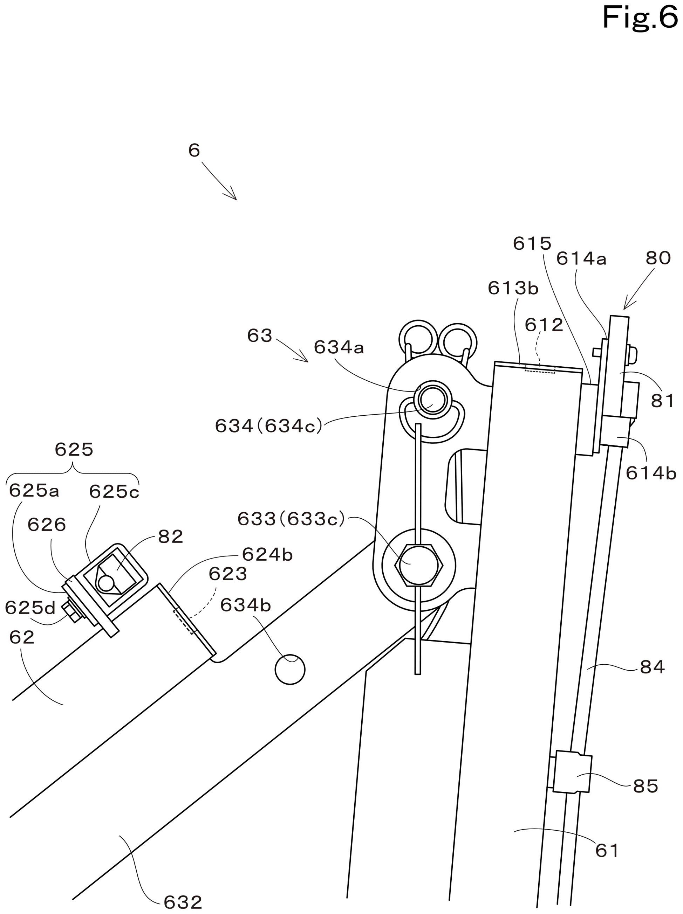

FIG. 4A is a cross-sectional view of an upper end portion of the lower pipe 61 and a lower end portion of the upper pipe 62 in the protection structure 6. FIG. 4B is an exploded perspective view of a first supporting body 613 of the lower pipe 61 and a second supporting body 624 of the upper pipe 62. FIG. 5 is an enlarged perspective view of an area including the hinge portion 63 of the protection structure 6 in the enabled state. FIG. 6 is an enlarged side view of an area including the hinge portion 63 of the protection structure 6 in the disabled state.

As illustrated in FIG. 4A and FIG. 4B, the lower pipe 61 includes a first electric wire 611 located therein, and the first supporting body 613 to support, at the upper end position (upper end) of the lower pipe 61, a first contact 612 connected to an end of the first electric wire 611. The first electric wire 611 is, for example, a single-core electric wire for wiring (electric wire i.e., one conductor covered with an insulator), but is not limited thereto. The first electric wire 611 may be a multiple-core electric wire for wiring (two or more electric wires covered with a sheath (jacket)). In other words, each of the left lower pipe 61L and the right lower pipe 61R which define the lower pipe 61 includes the first electric wire 611 and the first supporting body 613. A second end of the first electric wire 611 of the left lower pipe 61L and a second end of the first electric wire 611 of the right lower pipe 61R are connected to the battery 75 (see FIG. 2) of the working machine 1.

As illustrated in FIG. 3A and FIG. 3C, the upper pipe 62 includes a lighting apparatus 621, such as a lamp or a rotating beacon. As illustrated in FIG. 4A and FIG. 4B, the upper pipe 62 includes the second electric wire 622 located in the upper pipe 62 and having a first end connected to the lighting apparatus 621, and the second supporting body 624 to support, at the lower end position (lower end) of the upper pipe 62, a second contact 623 connected to a second end of the second electric wire 622. The second electric wire 622 is, for example, a single-core electric wire for wiring similar to the first electric wire 611. Note that when the first electric wire 611 is a multiple-core electric wire for wiring, the second electric wire 622 is a multiple-core electric wire for wiring similar to the first electric wire 611.

As illustrated in FIG. 3A and FIG. 3C, the upper pipe 62 includes a left upper pipe portion 62L positioned at an upper portion of the left lower pipe 61L, a right upper pipe portion 62R positioned at an upper portion of the right lower pipe 61R, a left extended pipe portion 62L1 which is an upper end portion of the left upper pipe portion 62L and bends rearward and extends upward of the operator's seat 4, a right extended pipe portion 62R1 which is an upper end portion of the right upper pipe portion 62R and bends rearward and extends upward of the operator's seat 4, and a coupler pipe portion 62M that couples an extended end of the left extended pipe portion 62L1 and an extended end of the right extended pipe portion 62R1.

As illustrated in FIG. 3C, the lighting apparatus 621 is attached to the coupler pipe portion 62M by a bracket 621a. In the coupler pipe portion 62M, a through-hole is provided in the attachment portion of the lighting apparatus 621 or the vicinity of the portion. The second electric wire 622 includes a left second electric wire 622L provided on the left side of the upper pipe 62, and a right second electric wire 622R provided on the right side of the upper pipe 62. The left second electric wire 622L is provided from the left upper pipe portion 62L, and passes through the left extended pipe portion 62L1 and the coupler pipe portion 62M, then exits through the through-hole of the coupler pipe portion 62M, and is connected to a first terminal (for example, a positive terminal) of the lighting apparatus 621. In contrast, the right second electric wire 622R is provided from the right upper pipe portion 62R, and passes through the right extended pipe portion 62R1 and the coupler pipe portion 62M, then exits through the through-hole of the coupler pipe portion 62M, and is connected to a second terminal (for example, a negative terminal) of the lighting apparatus 621.

As illustrated in FIG. 3C, the electric wire of the lighting apparatus 621 includes the first electric wire 611 and the first contact 612 (see FIG. 4A and FIG. 4B) inside the left lower pipe 61L, the left second electric wire 622L and the second contact 623, the right second electric wire 622R and the second contact 623, and the first electric wire 611 and the first contact 612 (see FIG. 4A and FIG. 4B) inside the right lower pipe 61R.

Here, the structures of the first supporting body 613 of the lower pipe 61 and the second supporting body 624 of the upper pipe 62 will be described in order.

As illustrated in FIG. 4A and FIG. 4B, the first supporting body 613 of the lower pipe 61 is a cylindrical insulator (such as rubber or a resin) which can be fitted into the lower pipe 61. For example, the first supporting body 613 includes a fit-in pipe portion 613a to be fitted into the lower pipe 61, a disc-shaped flange 613b radially projecting from an outer circumferential portion at a first end of the fit-in pipe portion 613a, and a holder 613c to hold the first electric wire 611 inserted into the pipe through an opening of a second end of the fit-in pipe portion 613a with the first contact 612 at the end of the first electric wire 611 slightly projecting from the flange 613b.

The fit-in pipe portion 613a has an outer circumference in a bellows-shape in a longitudinal direction, and thus is fixed while being fitted into the lower pipe 61. The holder 613c includes a counterbore 613c1 which is provided to extend from the first end of the fit-in pipe portion 613a to the interior of the pipe, a coil spring 613c2 provided in the counterbore 613c1 to bias the first contact 612 of the inserted first electric wire 611 to a first end, and a fixture 613c3 to fix the first electric wire 611 at the second end of the fit-in pipe portion 613a with the first contact 612 slightly projecting from the flange 613b. Thus, in the disabled state of the protection structure 6, the first contact 612 is in a state of slightly projecting from the flange 613b, and in the enabled state of the protection structure 6, as illustrated in FIG. 4A, the first contact 612 is biased to the second contact 623 by the coil spring 613c2, thus the first contact 612 is reliably brought into contact with the second contact 623.

As illustrated in FIG. 4A and FIG. 4B, the second supporting body 624 of the upper pipe 62 is similar in configuration to the first supporting body 613 of the lower pipe 61. The second supporting body 624 is a cylindrical insulator (such as rubber or a resin) which can be fitted into the upper pipe 62. For example, the second supporting body 624 includes a fit-in pipe portion 624a to be fitted into the upper pipe 62, a disc-shaped flange 624b radially projecting from an outer circumferential portion at a first end of the fit-in pipe portion 624a, and a holder 624c to hold the second electric wire 622 inserted into the pipe through an opening of a second end of the fit-in pipe portion 624a with the second contact 623 at the end of the second electric wire 622 slightly projecting from the flange 624b.

The fit-in pipe portion 624a has an outer circumference in a bellows-shape in a longitudinal direction, and thus is fixed while being fitted into the upper pipe 62. The holder 624c includes a counterbore 624c1 which is provided to extend from the first end of the fit-in pipe portion 624a to the interior of the pipe, a coil spring 624c2 provided in the counterbore 624c1 to bias the first contact 612 of the inserted second electric wire 622 to a first end, and a fixture 624c3 to fix the second electric wire 622 at the second end of the fit-in pipe portion 624a with the second electric wire 622 slightly projecting from the flange 624b. Thus, in the disabled state of the protection structure 6, the second contact 623 is in a state of slightly projecting from the flange 624b, and in the enabled state of the protection structure 6, the second contact 623 is biased to the first contact 612 by the coil spring 624c2, thus the second contact 623 is reliably brought into contact with the first contact 612.

The hinge portion 63 rotatably supports the upper pipe 62 such that the upper pipe 62 is movable between (i) an upright position in which the lower end of the upper pipe 62 is coupled to the upper portion of the lower pipe 61 to position the upper pipe 62 upright as indicated by a solid line in FIG. 1A, and (ii) an inclined position in which the lower end of the upper pipe 62 is uncoupled from the upper portion of the lower pipe 61 to position the upper pipe 62 inclined as indicated by a dash-dot-dot line in FIG. 1A. The hinge portion 63 is provided on the left side and the right side of the protection structure 6.

As illustrated in FIG. 3C, the hinge portion 63 includes a lower support piece 631 which projects forward on an upper end front side of the lower pipe 61 and extends in the length direction of the lower pipe 61, an upper support piece 632 which projects forward on a lower end front side of the upper pipe 62, extends in the length direction of the upper pipe 62, and further extends downward below the lower end of the upper pipe 62, a rotating shaft 633 that supports the upper support piece 632 rotatably relative to the lower support piece 631, and a pin member 634 that fixes the upper support piece 632 to the lower support piece 631.

As illustrated in FIG. 4A and FIG. 5, the rotating shaft 633 includes a first rotating shaft hole 633a extending in the width direction XB3 of the machine body 2 on the lower side of the lower support piece 631, a second rotating shaft hole 633b extending in the width direction XB3 of the machine body 2 on the lower side of the upper support piece 632, and a rotating shaft 633c which is inserted into the first rotating shaft hole 633a and the second rotating shaft hole 633b to serve as the rotating shaft core of the upper support piece 632.

As illustrated in FIG. 4A and FIG. 5, the pin member 634 includes a first pin hole 634a extending in the width direction XB3 of the machine body 2 on the upper side of the lower support piece 631, a second pin hole 634b extending in the width direction XB3 of the machine body 2 on the upper side of the upper support piece 632, and a fixing pin 634c which is inserted into the first pin hole 634a and the second pin hole 634b to regulate the rotation of the upper pipe 62.

As illustrated in FIG. 4A, in a state (in other words, the enabled state of the protection structure 6) where the upper pipe 62 is positioned at an upper portion of the lower pipe 61, the lower support piece 631 of the lower pipe 61 and a portion of the upper support piece 632 of the upper pipe 62, the portion projecting from the lower end of the upper pipe 62 overlap as viewed in the width direction XB3 of the machine body 2. In this state, the first pin hole 634a and the second pin hole 634b are matched, and therefore the fixing pin 634c can be inserted into the first pin hole 634a and the second pin hole 634b. Note that the fixing pin 634c is attached to the lower support piece 631 by a fall prevention wire, and is prevented from falling and losing when inserted or removed.

As indicated by the solid line in FIG. 1A, the enabled state of the protection structure 6 is a state in which the upper pipe 62 is in the upright position. In contrast, the disabled state of the protection structure 6 is a state other than the enabled state, and includes a state in which the upper pipe 62 is in the inclined position as indicated by the dash-dot-dot line in FIG. 1A.

When the upper pipe 62 is in the upright position (the enabled state of the protection structure 6) indicated by the solid line in FIG. 1A, as illustrated in FIG. 4A, the first contact 612 and the second contact 623 come into contact (contact each other). When described in detail, the first contact 612 of the left lower pipe 61L and the second contact 623 of the left upper pipe portion 62L come into contact, and the first contact 612 of the right lower pipe 61R and the second contact 623 of the right upper pipe portion 62R come into contact.

In contrast, when the upper pipe 62 is in the inclined position (the disabled state of the protection structure 6) indicated by the dash-dot-dot line in FIG. 1A, as illustrated in FIG. 6, the first contact 612 and the second contact 623 are not in contact (not contact each other). When described in detail, the first contact 612 of the left lower pipe 61L and the second contact 623 of the left upper pipe portion 62L are not in contact, and the first contact 612 of the right lower pipe 61R and the second contact 623 of the right upper pipe portion 62R are not in contact.

As illustrated in FIG. 2 and FIG. 3C, the working machine 1 includes a first detector 80 to detect the enabled state of the protection structure 6 indicated by the solid line in FIG. 1A, and the disabled state of the protection structure 6 indicated by the dash-dot-dot line in FIG. 1A.

As illustrated in FIG. 5, the first detector 80 includes a sensor portion 81 provided in or on the lower pipe 61, and a detected portion 82 provided in or on the upper pipe 62 and configured to be detected by the sensor portion 81. The first detector 80 is connected to the controller 51. The sensor portion 81 is, e.g., a magnetic proximity sensor such as a reed switch. In contrast, the detected portion 82 is, e.g., a magnet. When the sensor portion 81 detects the detected portion 82 (magnet) (in other words, in the case of the state shown in FIG. 5), the first detector 80 outputs an ON signal to the controller 51. On the other hand, when the sensor portion 81 does not detect the detected portion 82 (magnet) (in other words, in the case of the state shown in FIG. 6), the first detector 80 outputs an OFF signal to the controller 51.

As illustrated in FIG. 3A, a cable 84 of the sensor portion 81 is provided on the outer side of the lower pipe 61 in a longitudinal direction of the lower pipe 61. The cable 84 of the sensor portion 81 is held on the outer side of the lower pipe 61 by a clamp 85. Note that the cable 84 of the sensor portion 81 may be provided inside the lower pipe 61.

As illustrated in FIG. 5, the sensor portion 81 is attached to a first bracket 614 fixed to the lower pipe 61. The detected portion 82 is attached to a second bracket 625 which is fixed to the upper pipe 62.

As illustrated in FIG. 3C and FIG. 5, in the upright position (the enabled state of the protection structure 6) of the upper pipe 62, the first bracket 614 is fixed to the lower pipe 61, and the second bracket 625 is fixed to the upper pipe 62 such that the sensor portion 81 and the detected portion 82 are in opposed positions. Thus, the sensor portion 81 detects the detected portion 82 in the upright position (the enabled state of the protection structure 6) of the upper pipe 62.

In contrast, in the inclined position (the disabled state of the protection structure 6) of the upper pipe 62 as illustrated in FIG. 6, the sensor portion 81 and the detected portion 82 are not opposed, thus the sensor portion 81 does not detect the detected portion 82.

Note that the sensor portion 81 is not limited to a magnetic proximity sensor. The detected portion 82 is not limited to a magnet. The sensor portion 81 may be a contact electrical switch such as a limit switch, or may be a non-contact sensor such as a photoelectric sensor. When the sensor portion 81 is a contact electrical switch such as a limit switch, it is only necessary that the detected portion 82 is a metal component, a non-metal component (resin component), or the like, which is non-deformable by contact. When the sensor portion 81 is a non-contact sensor such as a photoelectric sensor, it is only necessary that the detected portion 82 is a component compatible with non-contact detection, such as a member which can reflect and block light.

The first detector 80 may detect the upright position (the enabled state of the protection structure 6) of the upper pipe 62, and the inclined position (the disabled state of the protection structure 6) of the upper pipe 62 by detecting continuity and the resistance between the first electric wire 611 and the second electric wire 622. For example, when continuity or a resistance value less than a threshold is observed between the first electric wire 611 and the second electric wire 622, the first detector 80 may detect that the upper pipe 62 is in the upright position, and when no continuity or a resistance value greater than or equal to a threshold is observed between the first electric wire 611 and the second electric wire 622, the first detector 80 may detect that the upper pipe 62 is in the inclined position.

As illustrated in FIG. 5, the sensor portion 81 is provided in the lower pipe 61 and the detected portion 82 is provided in the upper pipe 62, but, conversely, the sensor portion 81 may be provided in the upper pipe 62 and the detected portion 82 may be provided in the lower pipe 61.

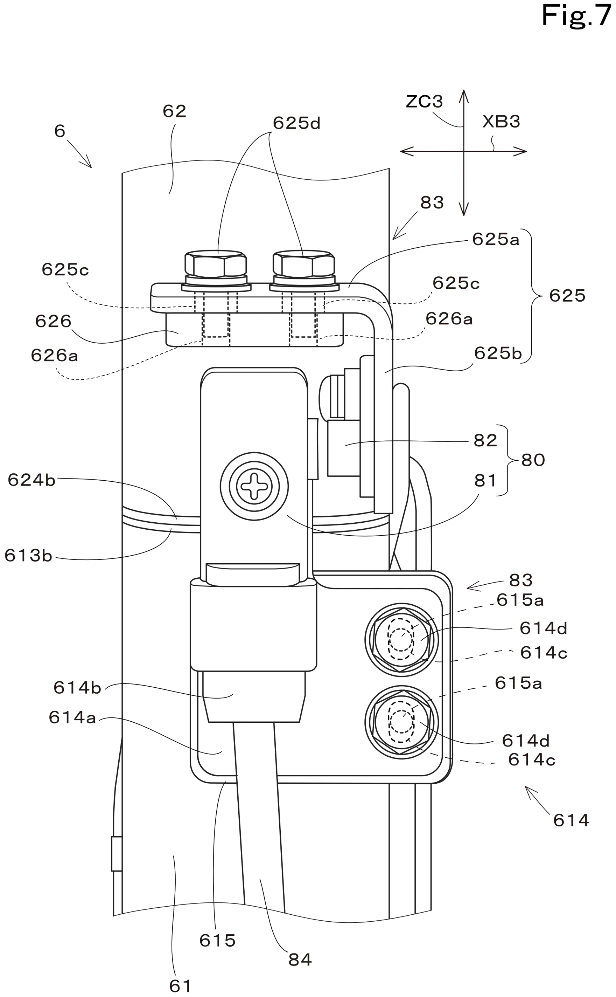

Here, the configuration for fixing the first bracket 614 to the lower pipe 61 will be described specifically. FIG. 7 is a rear view of a connecting (coupling) point between the lower pipe 61 and the upper pipe 62 on the left side of the protection structure 6.

As illustrated in FIG. 5 and FIG. 7, to the rear upper end of the lower pipe 61, a laterally elongated sheet metal 615 to which the first bracket 614 is secured is fixed (for example, welded) at one of the opposite ends in the lateral direction (first end). Two female threads 615a are arranged in a vertical direction at the other of the opposite ends of the laterally elongated sheet metal 615 in the lateral direction (second end). The first bracket 614 is, e.g., a sheet metal plate, and includes a laterally elongated portion 614a which is configured to contact with the laterally elongated sheet metal 615, an attachment portion 614b to which the sensor portion 81 is attached is provided at a first end of the laterally elongated portion 614a, and two vertically elongated holes 614c are arranged with a space therebetween in a vertical direction at a second end of the laterally elongated portion 614a. For example, with a fastener such as a bolt 614d inserted into each elongated hole 614c of the first bracket 614, the fastener is fastened to the female thread 615a of the laterally elongated sheet metal 615, thus the first bracket 614 is fixed to the laterally elongated sheet metal 615 of the lower pipe 61.

Next, the configuration for fixing the second bracket 625 to the upper pipe 62 will be described specifically. As illustrated in FIG. 5 and FIG. 7, a projecting sheet metal 626, to which the second bracket 625 is secured, is fixed (for example, welded) to the rear lower end of the upper pipe 62. In the projecting sheet metal 626, two female threads 626a are arranged in the lateral direction. The second bracket 625 is, e.g., an L-shaped sheet metal, and includes an upper surface portion 625a which is contactable with the projecting sheet metal 626, and an extended portion 625b which bends downward and extends from a second end of the upper surface portion 625a in the lateral direction. The detected portion 82 (for example, a magnet) is attached to the extended portion 625b. In the upper surface portion 625a, two laterally elongated holes 625c are arranged with a space therebetween in the lateral direction. For example, with a fastener such as a bolt 625d inserted into the two elongated holes 625c of the second bracket 625, the fastener is fastened to each female thread 626a of the projecting sheet metal 626, thus the second bracket 625 is fixed to the projecting sheet metal 626 of the upper pipe 62.

As illustrated in FIG. 5 and FIG. 7, the first detector 80 includes a position adjuster 83 that can adjust the positional relationship between the sensor portion 81 and the detected portion 82 (magnet) in a state in which the upper pipe 62 is in the upright position. The position adjuster 83 can adjust the positional relationship between the sensor portion 81 and the detected portion 82, for example, in the up-down direction (the height direction ZC3 of the machine body 2) and the left-right direction (the width direction XB3 of the machine body 2). With the position adjuster 83, the positional relationship between the sensor portion 81 and the detected portion 82 can be adjusted in a state in which the upper pipe 62 is in the upright position, thus detection by the first detector 80 can be suitably maintained.

As illustrated in FIG. 5 and FIG. 7, the vertical adjustment configuration of the position adjuster 83 includes the first bracket 614 including two vertically elongated holes 614c, the laterally elongated sheet metal 615 including two female threads 615a arranged with a space therebetween in a vertical direction, and the bolt(s) 614d to fix the first bracket 614 to the laterally elongated sheet metal 615. Specifically, the position of the first bracket 614 with respect to the laterally elongated sheet metal 615 is adjusted in the up-down direction (the height direction ZC3 of the machine body 2) by the two vertically elongated holes 614c of the first bracket 614, thus the first bracket 614 can be fixed to the laterally elongated sheet metal 615 by the bolt 614d.

On the other hand, as illustrated in FIG. 5 and FIG. 7, the lateral adjustment configuration of the position adjuster 83 includes the second bracket 625 including two laterally elongated holes 625c, the projecting sheet metal 626 including two female threads 626a arranged with a space therebetween in the lateral direction, and the bolt(s) 625d to fix the second bracket 625 to the projecting sheet metal 626. Specifically, the position of the second bracket 625 with respect to the projecting sheet metal 626 is adjusted in the left-right direction (the width direction XB3 of the machine body 2) by the laterally elongated holes 625c of the second bracket 625, thus the second bracket 625 can be fixed to the projecting sheet metal 626 by the bolt 625d.

Note that since the detected portion 82 (magnet) is long in the front-rear direction (the front-rear direction of the machine body 2), the positional relationship between the sensor portion 81 and the detected portion 82 does not need to be adjusted in the front-rear direction (the front-rear direction of the machine body 2). Thus, the position adjuster 83 does not have a configuration for adjusting the positional relationship between the sensor portion 81 and the detected portion 82 in the front-rear direction.

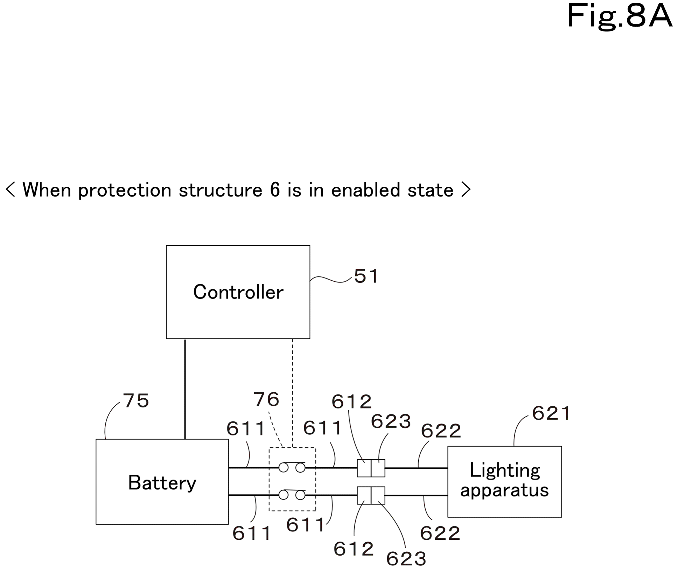

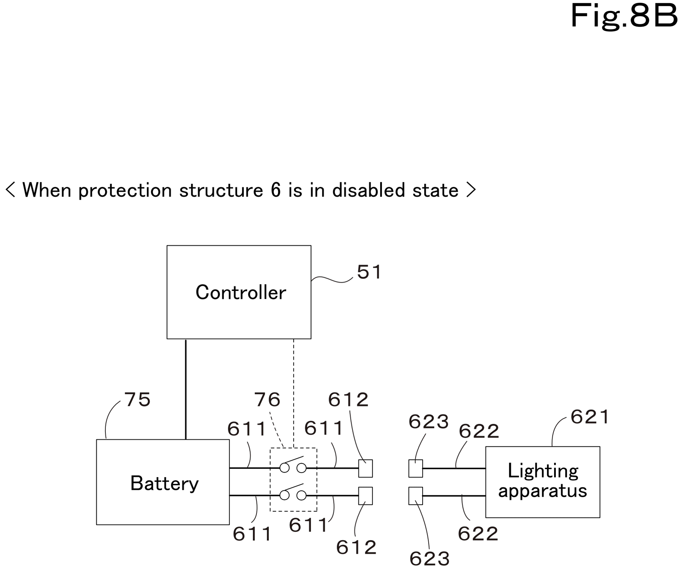

Note that as illustrated in FIG. 8A and FIG. 8B, the working machine 1 may be provided with a switch 76 for supplying or stopping electric power to the first electric wire 611. FIG. 8A is a diagram illustrating an example of turning on the switch 76 by the controller 51 when the protection structure 6 is in the enabled state. FIG. 8B is a diagram illustrating an example of turning off the switch 76 by the controller 51 when the protection structure 6 is in the disabled state. The switch 76 is provided at a position close to the battery 75 of the first electric wire 611. The switch 76 is, e.g., a relay, an electromagnetic contactor, an electrical switch and the like. The switch 76 may be provided in the output terminal of the battery 75, or may have an output ON/OFF function of the battery 75.

In the upright position (the enabled state of the protection structure 6) of the upper pipe 62 illustrated in FIG. 3C, the left upper pipe portion 62L is positioned at an upper portion of the left lower pipe 61L, and the right upper pipe portion 62R is positioned at an upper portion of the right lower pipe 61R. Thus, as illustrated in FIG. 4A, the first contact 612 of the lower pipe 61 and the second contact 623 of the upper pipe 62 come into contact, and the first contact 612 and the second contact 623 are not exposed. As illustrated in FIG. 8A, the controller 51 may turn on the switch 76 to supply electric power to the lighting apparatus 621 based on the detection result (signal indicating the enabled state of the protection structure 6, i.e., ON signal) from the first detector 80.

In contrast, as illustrated in FIG. 6, in the inclined position (the disabled state of the protection structure 6) of the upper pipe 62, the first contact 612 of the left lower pipe 61L and the first contact 612 of the right lower pipe 61R are exposed. Thus, as illustrated in FIG. 8B, the controller 51 may turn off the switch 76 based on the detection result (signal indicating the disabled state of the protection structure 6, i.e., OFF signal) from the first detector 80. The controller 51 may turn off the switch 76 when no continuity or a resistance value greater than or equal to a threshold is observed between the first electric wire 611 and the second electric wire 622. In this case, the switch 76 is off, thus electric power is not supplied to the first contact 612 of the left lower pipe 61L and the first contact 612 of the right lower pipe 61R, thus touching the first contact 612 causes no electric shock.

As illustrated in FIG. 2, the working machine 1 includes a safety device 154A such as a seat belt 154 to keep the operator in the operator's seat 4, and a second detector 90 to detect a used state and a non-used state of the safety device 154A (hereinafter referred to as the "seat belt 154" as appropriate).

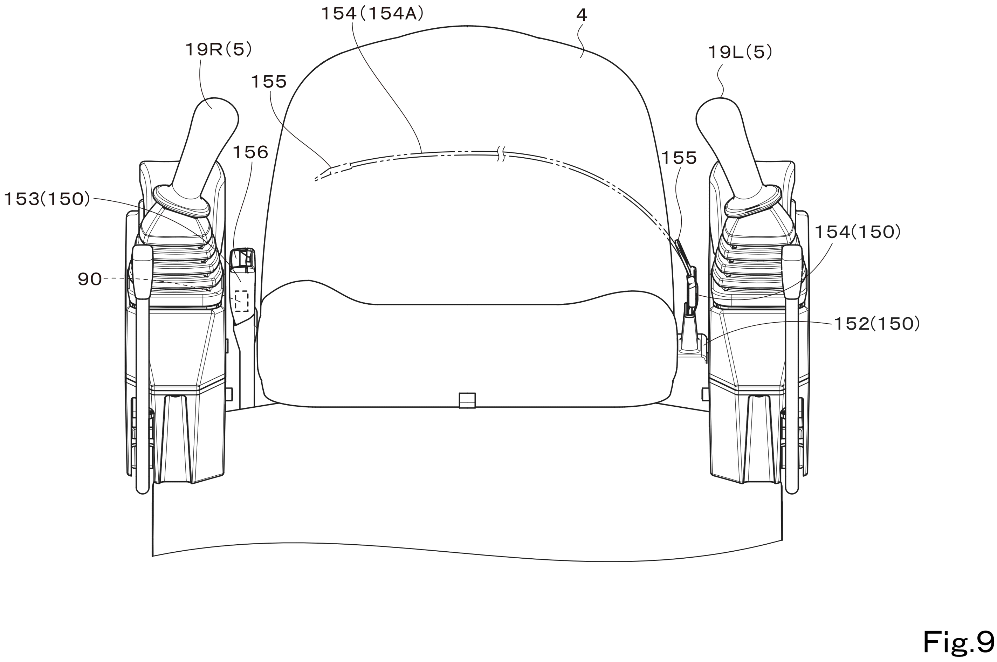

FIG. 9 is a front view of the operator's seat 4 including a seat belt device 150, a manual operator 5 and the like. As illustrated in FIG. 9, the working machine 1 includes the seat belt device 150. The operator's seat 4 is provided with the seat belt device 150. The seat belt device 150 includes a seat belt 154 to be worn by an operator sitting on the operator's seat 4, a housing 152 to house the seat belt 154, and a buckle 153 to and from which an end 155 of the seat belt 154 is attachable and detachable.

As illustrated in FIG. 9, the seat belt 154 is housed in the housing 152 such that the seat belt 154 is allowed to be pulled out. The end 155 of the seat belt 154 projects from the housing 152, and the base end is housed inside the housing 152.

The end 155 of the seat belt 154 pulled out from the housing 152 is inserted into and engaged with the buckle 153. The buckle 153 includes a release button 156. The engagement of the end 155 of the seat belt 154 is released by the operator operating the release button 156 of the buckle 153, thus the end 155 of the seat belt 154 is removed from the buckle 153.

As illustrated in FIG. 2 and FIG. 9, the buckle 153 is provided with the second detector 90. The second detector 90 detects a state (a used state in which the seat belt is used, i.e. a fastened state of the seat belt 154) in which the end 155 of the seat belt 154 is engaged with the buckle 153, and a state (a non-used state in which the seat belt is not used, i.e., an unfastened state of the seat belt 154) in which the end 155 is not engaged with the buckle 153. The second detector 90 is connected to the controller 51.

The second detector 90 is, e.g., a reed switch. The end 155 of the seat belt 154 is provided with a magnet. In a state in which the end 155 of the seat belt 154 is engaged with the buckle 153, the magnetic force of the magnet in the end 155 acts on the reed switch, thus two contacts in the reed switch are in a contact state. In this case, the second detector 90 outputs a signal (for example, an ON signal) indicating a contact state to the controller 51.

In contrast, in a state in which the end 155 of the seat belt 154 is not engaged with the buckle 153, the magnetic force of the magnet in the end 155 does not act on the reed switch, thus two contacts in the reed switch are in a separate state. In this case, the second detector 90 outputs a signal (for example, an OFF signal) indicating a separate state to the controller 51.

Note that the second detector 90 may be a magnetic proximity switch other than the reed switch, and various contact or non-contact switches, and sensors may be used as long as fastening and unfastening of the seat belt 154 are detectable.

The controller 51 illustrated in FIG. 2 limits (restricts, controls) the operation of the working machine 1 based on the detection result from the first detector 80. Also, the controller 51 limits the operation of the working machine 1 based on the detection result from the first detector 80 and the detection result from the second detector 90.

When the protection structure 6 is in the enabled state and the seat belt 154 is in the non-used state, the controller 51 prohibits the operation of the working machine 1. When the protection structure 6 is in the disabled state and the seat belt 154 is in the used state, the controller 51 prohibits the operation of the working machine 1. Specifically, the controller 51 prohibits driving of the prime mover E1 as the prohibition of the operation of the working machine 1 (the prohibiting the operation of the working machine 1 by the controller 51 includes prohibiting driving of the prime mover E1).

Note that instead of prohibiting the driving of the prime mover E1, the controller 51 may stop supply of hydraulic fluid from the hydraulic pump P (for example, the first hydraulic pump P1 and the second hydraulic pump P2) to the traveling device 10 and the working device 20. For example, the controller 51 stops supplying hydraulic fluid to the traveling device 10 and the working device 20 by returning (unloading hydraulic pressure) the hydraulic fluid delivered from the hydraulic pump P to the hydraulic fluid tank without supplying the hydraulic fluid to the hydraulic equipment. For example, when the manual operator 5 includes an operating valve, the controller 51 cuts off supply of pilot oil from the third hydraulic pump P3 to the operating valve of the manual operator by a hydraulic lock switching valve, thus may achieve a hydraulic lock state in which the traveling device 10 and working device 20 are not operated. The controller 51 may achieve a hydraulic lock state in which the traveling device 10 and working device 20 are not operated by outputting a control signal to deenergize the solenoids of all control valves V1 to V10.

When the protection structure 6 is in the disabled state and the seat belt 154 is in the non-used state, the controller 51 does not prohibit the operation of the working machine 1. Specifically, the controller 51 does not prohibit the driving of the prime mover E1.

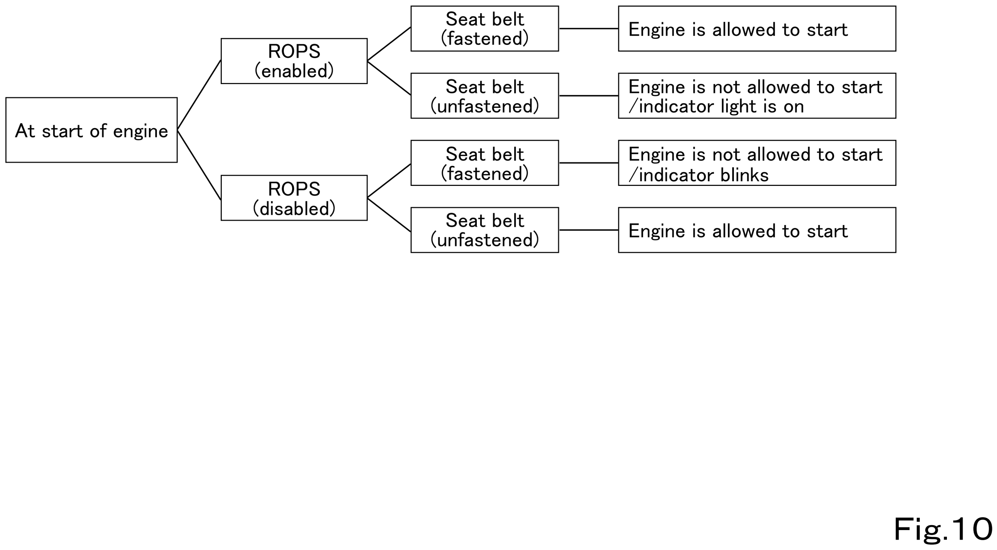

FIG. 10 is a diagram illustrating an example of conditions for determination of whether the prime mover E1 can be started, based on the state of the protection structure 6 and the safety device 154A (seat belt 154). The storage unit 54 pre-stores the conditions for determination illustrated in FIG. 10. At the start of the prime mover E1, the controller 51 determines whether the prime mover E1 can be started, based on the conditions for determination stored in the storage unit 54 and illustrated in FIG. 10.

As illustrated in FIG. 10, upon receipt of an instruction to start the prime mover E1, when the protection structure 6 is in the enabled state and the seat belt 154 is in the used state, or when the protection structure 6 is in the disabled state and the seat belt 154 is in the non-used state, the controller 51 determines that the prime mover E1 is allowed start, and starts the prime mover E1. On the contrary, when the protection structure 6 is in the enabled state and the seat belt 154 is in the non-used state, or when the protection structure 6 is in the disabled state and the seat belt 154 is in the used state, the controller 51 determines that the prime mover E1 is not allowed to start, and does not start the prime mover E1.

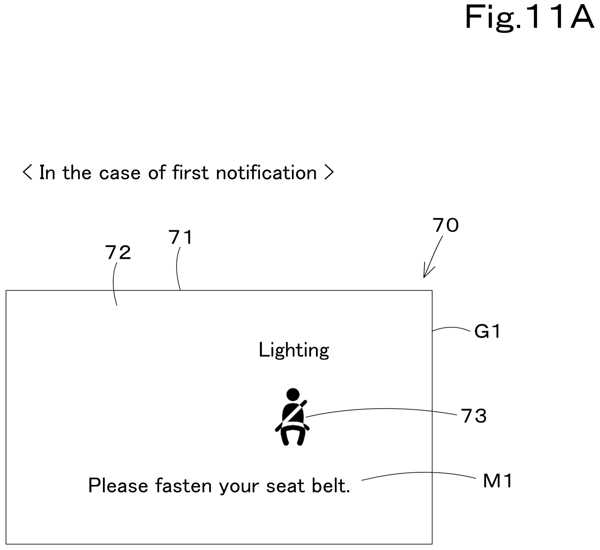

As illustrated in FIG. 10, the notifier 70 provides a first notification (for example, lighting of an indicator 73) asking to use the seat belt 154 when the protection structure 6 is in the enabled state and the seat belt 154 is in the non-used state. FIG. 11A is a view illustrating an example of the first notification provided by the notifier 70. As illustrated in FIG. 11A, the display 71 lights on, for example, the indicator 73 (warning light) related to the seat belt 154 as the first notification on the display portion 72. Note that the display 71 may display a message M1 saying "Please fasten your seat belt" along with or instead of lighting the indicator 73. The audio output device of the notifier 70 may provide a voice notification of "Please fasten your seat belt".

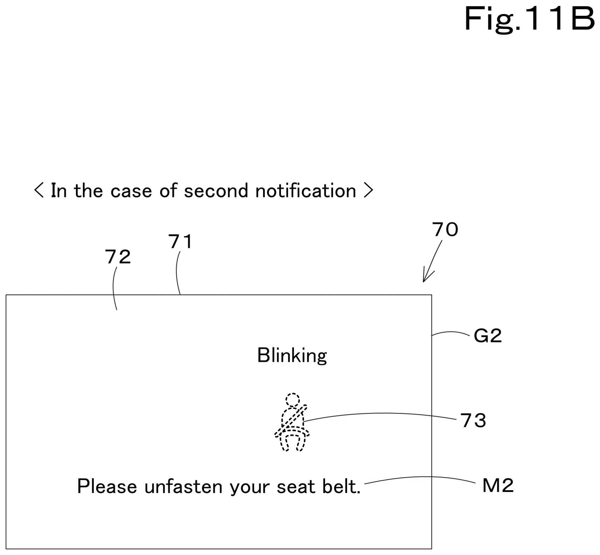

On the other hand, as illustrated in FIG. 10, the notifier 70 provides a second notification (for example, blinking of the indicator 73) asking to not use the seat belt 154 when the protection structure 6 is in the disabled state and the seat belt 154 is in the used state. FIG. 11B is a view illustrating an example of the second notification provided by the notifier 70. As illustrated in FIG. 11B, the display 71 causes the indicator 73 (warning light) to blink on the display portion 72 as the second notification. Note that the display 71 may display a message M2 saying "Please unfasten your seat belt" along with or instead of blinking the indicator 73. The audio output device of the notifier 70 may provide a voice notification of "Please unfasten your seat belt".

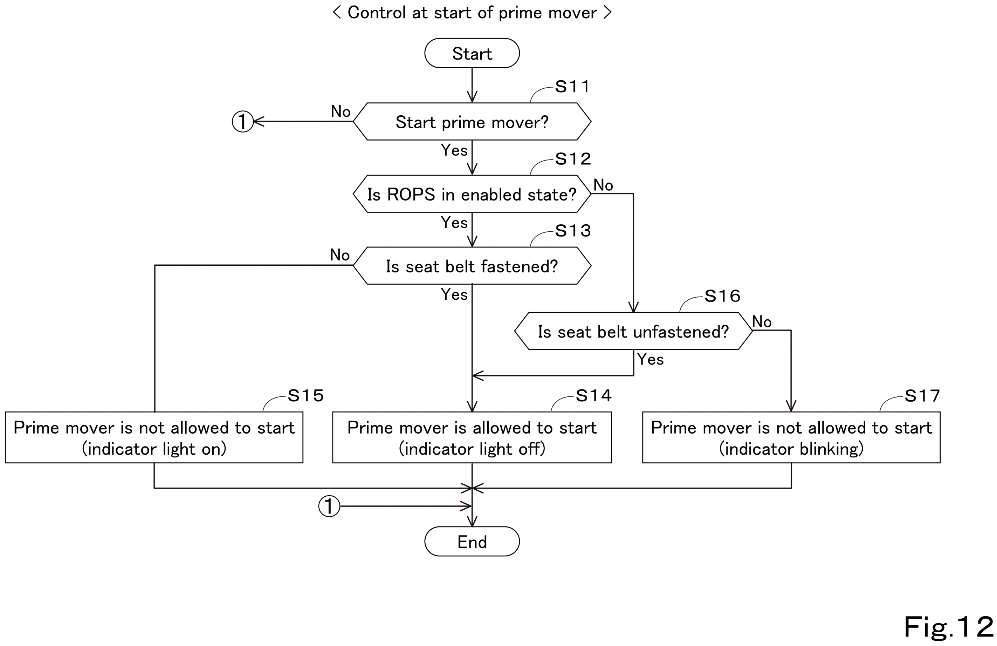

Here, the control at the start of the prime mover E1 by the controller 51 will be described using FIG. 12. FIG. 12 is a flowchart illustrating an example of the control at the start of the prime mover E1.

As illustrated in FIG. 12, the controller 51 determines whether the prime mover E1 is started (S11). For example, when detecting that the ignition key is ON, the controller 51 determines that the prime mover E1 is started (Yes in S11). Note that when the working machine 1 includes a start button to provide instructions for starting the prime mover E1, the start of the prime mover E1 may be when the start button is turned ON. On the other hand, when the start of the prime mover E1 is not detected (No in S11), the controller 51 completes the present process.

When the prime mover E1 is determined to be started (Yes in S11), the controller 51 determines whether the protection structure 6 is in the enabled state (state in which the upper pipe 62 is in the upright position) based on the detection signal from the first detector 80 (S12). When the detection signal from the first detector 80 is ON, the controller 51 determines that the protection structure 6 is in the enabled state (Yes in S12).

When the protection structure 6 is determined to be in the enabled state (Yes in S12), the controller 51 determines whether the seat belt 154 is in the used state (fastened state) based on the detection signal from the second detector 90 (S13). When the detection signal from the second detector 90 is ON, the controller 51 determines that the seat belt 154 is in the used state (fastened state) (Yes in S13), determines that the prime mover E1 can be started based on the conditions for determination illustrated in FIG. 10 (S14), and starts the prime mover E1. In this case, the controller 51 does not display the indicator 73 of the notifier 70 (display 71). In other words, the display 71 sets the indicator 73 to a light-off state.

On the other hand, in S13, when the detection signal from the second detector 90 is OFF, the controller 51 determines that the seat belt 154 is in the non-used state (unfastened state) (No in S13), determines that the prime mover E1 cannot be started based on the conditions for determination illustrated in FIG. 10 (S15), and does not start the prime mover E1. In this case, as illustrated in FIG. 11A, the controller 51 lights on the indicator 73 of the notifier 70 (display 71). In other words, the display 71 sets the indicator 73 to a light-on state.

On the other hand, in S12, when the detection signal from the first detector 80 is OFF, the controller 51 determines that the protection structure 6 is not in the enabled state (No in S12). In other words, in the case of No in S12, the controller 51 determines that the protection structure 6 is in the disabled state (state in which the upper pipe 62 is in the inclined position).

When the protection structure 6 is determined to be in the disabled state (No in S12), the controller 51 determines whether the seat belt 154 is in the non-used state (unfastened state) based on the detection signal from the second detector 90 (S16). When the detection signal from the second detector 90 is OFF, the controller 51 determines that the seat belt 154 is in the non-used state (unfastened state) (Yes in S16), determines that the prime mover E1 can be started based on the conditions for determination illustrated in FIG. 10 (S14), and starts the prime mover E1. In this case, the controller 51 does not display the indicator 73 of the notifier 70 (display 71). In other words, the display 71 sets the indicator 73 to the light-off state.

On the other hand, in S16, when the detection signal from the second detector 90 is ON, the controller 51 determines that the seat belt 154 is in the used state (fastened state) (No in S16), determines that the prime mover E1 cannot be started based on the conditions for determination illustrated in FIG. 10 (S17), and does not start the prime mover E1. In this case, as illustrated in FIG. 11B, the controller 51 causes the indicator 73 of the notifier 70 (display 71) to blink. In other words, the display 71 sets the indicator 73 to a blinking state.

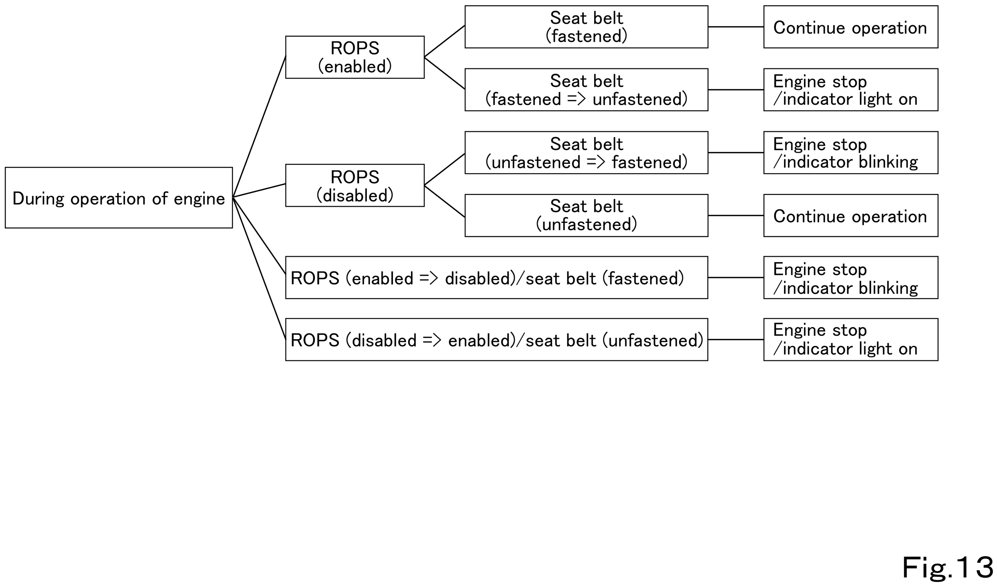

Next, the conditions for determination during operation of the prime mover E1 will be described. FIG. 13 is a diagram illustrating an example of conditions for determination to continue or stop the operation of the prime mover E1 based on the state of the protection structure 6 and the safety device 154A (seat belt 154). The storage unit 54 pre-stores the conditions shown in FIG. 13. During operation of the prime mover E1, the controller 51 determines whether the operation of the prime mover E1 is continued or stopped, based on the conditions pre-stored in the storage unit 54 and shown in FIG. 13.

As illustrated in FIG. 13, during operation of the prime mover E1, the controller 51 observes a change in the state of the protection structure 6 and the seat belt 154 at a determination timing in every predetermined period (for example, every several hundred milliseconds).

As illustrated in FIG. 13, during operation of the prime mover E1 (while the prime mover E1 is operating), the controller 51 stops the prime mover E1 when the protection structure 6 is in the enabled state and the seat belt 154 changes from the used state to the non-used state, when the protection structure 6 is in the disabled state and the seat belt 154 changes from the non-used state to the used state, when the seat belt 154 is in the used state and the protection structure 6 changes from the enabled state to the disabled state, or when the seat belt 154 is in the non-used state and the protection structure 6 changes from the disabled state to the enabled state.

As illustrated in FIG. 13, the notifier 70 provides the first notification (for example, lighting of the indicator 73) asking to use the seat belt 154 when the protection structure 6 is in the enabled state and the seat belt 154 changes from the used state to the non-used state, or when the seat belt 154 is in the non-used state and the protection structure 6 changes from the disabled state to the enabled state. As illustrated in FIG. 11A, the display 71 lights on, for example, the indicator 73 (warning light) related to the seat belt 154 as the first notification on the display portion 72. Note that the display 71 may display the message M1 saying "Please fasten your seat belt" along with or instead of lighting the indicator 73. The audio output device of the notifier 70 may provide a voice notification of "Please fasten your seat belt".

On the other hand, as illustrated in FIG. 13, the notifier 70 provides the second notification (for example, blinking of the indicator 73) asking to not use the seat belt 154 when the protection structure 6 is in the disabled state and the seat belt 154 changes from the non-used state to the used state, or when the seat belt 154 is in the used state and the protection structure 6 changes from the enabled state to the disabled state. FIG. 11B is a view illustrating an example of the second notification provided by the notifier 70. As illustrated in FIG. 11B, the display 71 causes the indicator 73 (warning light) to blink on the display portion 72 as the second notification. Note that the display 71 may display the message M2 saying "Please unfasten your seat belt" along with or instead of blinking the indicator 73. The audio output device of the notifier 70 may provide the voice notification of "Please unfasten your seat belt".

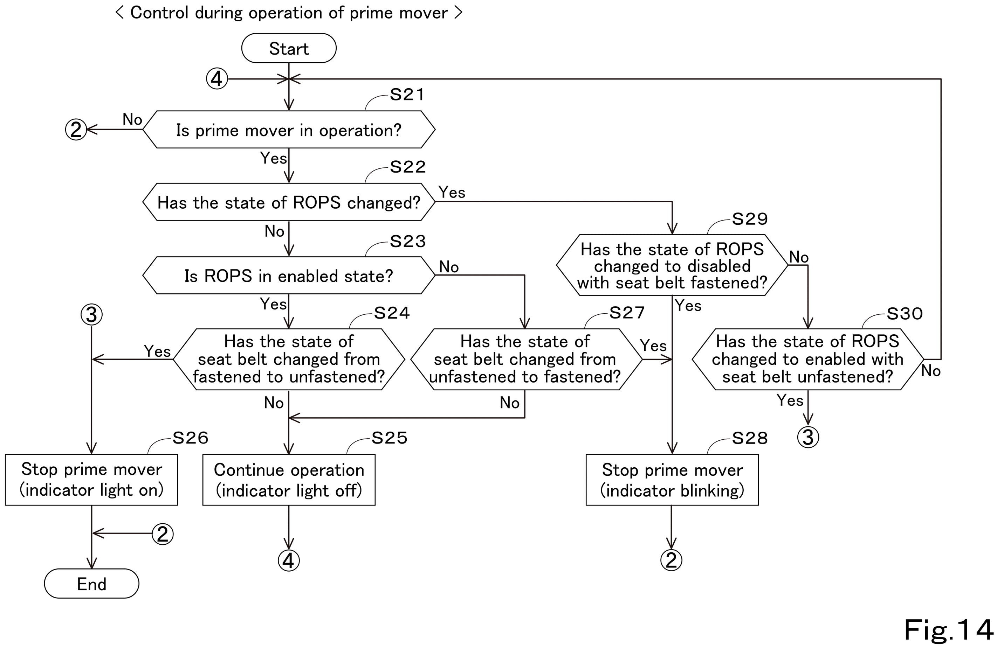

Here, the control during operation of the prime mover E1 by the controller 51 will be described using FIG. 14. FIG. 14 is a flowchart illustrating an example of the control during operation of the prime mover E1.

As illustrated in FIG. 14, the controller 51 determines whether the prime mover E1 is in operation (S21). For example, when the rotation of the prime mover E1 is detected by a rotation detection sensor to detect the rotation of the output shaft of the prime mover E1, the controller 51 determines that the prime mover E1 is in operation (Yes in S21). Note that during operation of the prime mover E1 may be when the number of revolutions of the prime mover E1 is controlled by the rotation speed controller 55. On the other hand, when the prime mover E1 is not in operation (No in S21), the controller 51 completes the present process.

When the prime mover E1 is determined to be in operation (Yes in S21), the controller 51 determines the presence or absence of state change of the protection structure 6 based on the detection signal from the first detector 80 (S22). When the detection signal from the first detector 80 neither changes from ON to OFF nor OFF to ON, the controller 51 determines that there is no change in the state of the protection structure 6 (No in S22).

When determining that there is no change in the state of the protection structure 6 (No in S22), the controller 51 determines whether the protection structure 6 is in the enabled state (state in which the upper pipe 62 is in the upright position) (S23). When the detection signal from the first detector 80 is ON, the controller 51 determines that the protection structure 6 is in the enabled state (Yes in S23).

When the protection structure 6 is determined to be in the enabled state (Yes in S23), the controller 51 determines whether the seat belt 154 has changed from the used state (fastened state) to the non-used state (unfastened state) based on the detection signal from the second detector 90 (S24). When the detection signal from the second detector 90 has not changed from ON to OFF, the controller 51 determines that the seat belt 154 has not changed to the non-used state (unfastened state) (No in S24), determines that the prime mover E1 is to continue in operation based on the conditions for determination illustrated in FIG. 13 (S25), and continues to operate the prime mover E1. In this case, the controller 51 does not display the indicator 73 of the notifier 70 (display 71). In other words, the display 71 sets the indicator 73 to the light-off state.

On the other hand, in S24, when the detection signal from the second detector 90 has changed from ON to OFF, the controller 51 determines that the seat belt 154 has changed to the non-used state (unfastened state) (Yes in S24), determines that the prime mover E1 is to be stopped based on the conditions for determination illustrated in FIG. 13 (S26), and stops the prime mover E1. In this case, as illustrated in FIG. 11A, the controller 51 lights on the indicator 73 of the notifier 70 (display 71). In other words, the display 71 sets the indicator 73 to the light-on state.

On the other hand, in S23, when the protection structure 6 is determined to not be in the enabled state (No in S23), the controller 51 determines whether the seat belt 154 has changed from the non-used state (unfastened state) to the used state (fastened state) based on the detection signal from the second detector 90 (S27).

When the detection signal from the second detector 90 has not changed from OFF to ON, the controller 51 determines that the seat belt 154 has not changed to the used state (fastened state) (No in S27), determines that the prime mover E1 is to continue in operation based on the conditions for determination illustrated in FIG. 13 (S25), and continues to operate the prime mover E1. In this case, the controller 51 does not display the indicator 73 of the notifier 70 (display 71). In other words, the display 71 sets the indicator 73 to the light-off state. After S25, the controller 51 returns to S21.

On the other hand, in S27, when the detection signal from the second detector 90 has changed from OFF to ON, the controller 51 determines that the seat belt 154 has changed to the used state (fastened state) (Yes in S27), determines that the prime mover E1 is to be stopped based on the conditions for determination illustrated in FIG. 13 (S28), and stops the prime mover E1. In this case, as illustrated in FIG. 11B, the controller 51 causes the indicator 73 of the notifier 70 (display 71) to blink. In other words, the display 71 sets the indicator 73 to the blinking state.

On the other hand, in S22, when the detection signal from the first detector 80 has changed from ON to OFF or changed from OFF to ON, the controller 51 determines that there is a change in the state of the protection structure 6 (Yes in S22).

The controller 51 determines whether the protection structure 6 has changed to the disabled state and the seat belt 154 is in the used state (fastened state) (S29). When the detection signal from the first detector 80 has changed from ON to OFF, and the detection signal from the second detector 90 is ON, the controller 51 determines that the protection structure 6 has changed to the disabled state and the seat belt 154 is in the used state (fastened state) (Yes in S29).

When it is determined that the protection structure 6 has changed to the disabled state and the seat belt 154 is in the used state (fastened state) (Yes in S29), the controller 51 determines that the prime mover E1 is to be stopped based on the conditions for determination illustrated in FIG. 13 (S28), and stops the prime mover E1. In this case, as illustrated in FIG. 11B, the controller 51 causes the indicator 73 of the notifier 70 (display 71) to blink. In other words, the display 71 sets the indicator 73 to the blinking state.

On the other hand, when it is not determined that the protection structure 6 has changed to the disabled state and the seat belt 154 is in the used state (fastened state) (No in S29), the controller 51 determines whether the protection structure 6 has changed to the enabled state and the seat belt 154 is in the non-used state (unfastened state) (S30). When the detection signal from the first detector 80 has changed from OFF to ON, and the detection signal from the second detector 90 is OFF, the controller 51 determines that the protection structure 6 has changed to the enabled state and the seat belt 154 is in the non-used state (unfastened state) (Yes in S30), determines that the prime mover E1 is to be stopped based on the conditions for determination illustrated in FIG. 13 (S26), and stops the prime mover E1. In this case, as illustrated in FIG. 11A, the controller 51 lights on the indicator 73 of the notifier 70 (display 71). In other words, the display 71 sets the indicator 73 to the light-on state.

When it is not determined that the protection structure 6 has changed to the enabled state and the seat belt 154 is in the non-used state (unfastened state) (No in S30), the controller 51 returns to S21.

After S26 or after S28, the controller 51 completes the present process.

Main characteristic items and effects of working machines 1 in the example embodiments described above are as follows.

(Item A1) A working machine 1 including a traveling device 10, a swivel body 2A to be supported on the traveling device 10 such that the swivel body 2A is turnable about a vertical axis, an operator's seat 4 provided on the swivel body 2A, a protection structure 6 movable between an enabled state in which the protection structure 6 is enabled to protect an operator sitting in the operator's seat 4, and a disabled state other than the enabled state, and a first detector 80 to detect the enabled state and the disabled state of the protection structure 6.

With this configuration, the first detector 80 detects the enabled state and the disabled state of the protection structure 6, thus the working machine 1 can respond according to the enabled state of the protection structure 6 and respond according to the disabled state of the protection structure 6.

(Item A2) The working machine 1 according to item A1, further including a controller 51 configured or programmed to control an operation of the working machine 1, wherein the controller 51 is configured or programmed to limit the operation of the working machine 1 based on a detection result from the first detector 80.

With this configuration, the controller 51 limits the operation of the working machine 1 based on the detection result from the first detector 80. Thus, the working machine 1 can operate according to the enabled state or the disabled state of the protection structure 6.

(Item A3) The working machine 1 according to item A1 or A2, further including a safety device 154A to keep the operator in the operator's seat 4, and a second detector 90 to detect a used state and a non-used state of the safety device 154A, wherein the controller 51 is configured or programmed to limit the operation of the working machine 1 based on the detection result from the first detector 80 and a detection result from the second detector 90.

With this configuration, the controller 51 limits the operation of the working machine 1 based on the detection results from the first detector 80 and the second detector 90. Thus, the working machine 1 can operate according to a combination of the enabled state or the disabled state of the protection structure 6 and the used state or the non-used state of the safety device 154A.

(Item A4) The working machine 1 according to item A3, wherein the controller 51 is configured or programmed to prohibit the operation of the working machine 1 when the protection structure 6 is in the enabled state and the safety device 154A is in the non-used state.

With this configuration, the working machine 1 does not operate when the protection structure 6 is in the enabled state and the safety device 154A is in the non-used state, thus the safety of the operator can be ensured.

(Item A5) The working machine 1 according to item A3, wherein the controller 51 is configured or programmed to not prohibit the operation of the working machine 1 when the protection structure 6 is in the disabled state and the safety device 154A is in the non-used state.

With this configuration, the controller 51 does not prohibit the operation of the working machine 1 when the protection structure 6 is in the disabled state and the safety device 154A is in the non-used state. Thus, the operator can operate the working machine 1 with the protection structure 6 in the disabled state. In the disabled state of the protection structure 6, the safety device 154A is not required to be used, thus, when the working machine 1 is operated with the protection structure 6 in the disabled state, the operator can leave the operator's seat 4 and protect themselves in case of emergency.

(Item A6) The working machine 1 according to item A4, wherein the controller 51 is configured or programmed to prohibit the operation of the working machine 1 when the protection structure 6 is in the disabled state and the safety device 154A is in the used state.

With this configuration, the working machine 1 does not operate when the protection structure 6 is in the disabled state and the safety device 154A is in the used state. Thus, when the working machine 1 is operated with the protection structure 6 in the disabled state, it is possible to reduce the danger of the operator due to the difficulty of leaving the operator's seat 4 in case of emergency.

(Item A7) The working machine 1 according to item A6, further including a notifier 70 to provide a first notification asking to use the safety device 154A when the protection structure 6 is in the enabled state and the safety device 154A is in the non-used state, and provide a second notification asking to not use the safety device 154A or to enable the protection structure 6 when the protection structure 6 is in the disabled state and the safety device 154A is in the used state.

With this configuration, the notifier 70 can allow the operator to notice that not using the safety device 154A is unfavorable by providing the first notification (for example, lighting of the indicator 73) asking to use the safety device 154A when the protection structure 6 is in the enabled state and the safety device 154A is in the non-used state. Thus, the operator can quickly respond and use the safety device 154A. On the other hand, the notifier 70 can allow the operator to notice that use of the safety device 154A is unfavorable by providing the second notification (for example, blinking of the indicator 73) asking to not use the safety device 154A when the protection structure 6 is in the disabled state and the safety device 154A is in the used state. Thus, the operator can quickly respond and stop using the safety device 154A. The second notification may be a notification asking to enable the protection structure 6.

(Item A8) The working machine 1 according to item A4 or A6, further including a working device 20 provided on the swivel body 2A, and a prime mover E1 to supply the traveling device 10 and the working device 20 with power, wherein the prohibiting the operation of the working machine 1 by the controller 51 includes prohibiting driving of the prime mover E1.

With this configuration, the operation of the traveling device 10 and the working device 20 of the working machine 1 can be quickly and reliably stopped by prohibiting the driving of the prime mover E1, thus the safety of the operator can be ensured.

(Item A9) The working machine 1 according to item A4 or A6, further including a working device 20 provided on the swivel body 2A, a prime mover E1 to supply the traveling device 10 and the working device 20 with power, and a hydraulic pump P to be driven by power from the prime mover E1, wherein the traveling device 10 and the working device 20 are configured to be driven based on hydraulic fluid from the hydraulic pump P, and the controller 51 is configured or programmed to stop supply of hydraulic fluid from the hydraulic pump P to the traveling device 10 and the working device 20.

With this configuration, the operation of the traveling device 10 and the working device 20 of the working machine 1 can be quickly and reliably stopped by performing "hydraulic locking" in which the traveling device 10 and the working device 20 do not operate (by breaking the hydraulic circuit to prevent actuations), thus, the safety of the operator can be ensured.

(Item A10) The working machine 1 according to item A8, wherein the controller 51 is configured or programmed to, upon receipt of an instruction to start the prime mover E1, start the prime mover E1 when the protection structure 6 is in the enabled state and the safety device 154A is in the used state or when the protection structure 6 is in the disabled state and the safety device 154A is in the non-used state, and not start the prime mover E1 when the protection structure 6 is in the enabled state and the safety device 154A is in the non-used state or when the protection structure 6 is in the disabled state and the safety device 154A is in the used state.

With this configuration, the working machine 1 does not operate when the protection structure 6 is in the enabled state and the safety device 154A is in the non-used state or when the protection structure 6 is in the disabled state and the safety device 154A is in the used state, thus the safety of the operator can be ensured.

(Item A11) The working machine 1 according to item A10, further including a notifier 70 to provide a first notification asking to use the safety device 154A when the protection structure 6 is in the enabled state and the safety device 154A is in the non-used state, and provide a second notification asking to not use the safety device 154A when the protection structure 6 is in the disabled state and the safety device 154A is in the used state.

With this configuration, at the start of the prime mover E1, the notifier 70 can allow the operator to notice that not using the safety device 154A is unfavorable by providing the first notification (for example, lighting of the indicator 73) asking to use the safety device 154A when the protection structure 6 is in the enabled state and the safety device 154A is in the non-used state. Thus, at the start of the prime mover E1, the operator can quickly respond and use the safety device 154A. On the other hand, at the start of the prime mover E1, the notifier 70 can allow the operator to notice that use of the safety device 154A is unfavorable by providing the second notification (for example, blinking of the indicator 73) asking to not use the safety device 154A when the protection structure 6 is in the disabled state and the safety device 154A is in the used state. Thus, at the start of the prime mover E1, the operator can quickly respond and stop using the safety device 154A.

(Item A12) The working machine 1 according to item A8, A10 or A11, wherein the controller 51 is configured or programmed to, while the prime mover E1 is operating, stop the prime mover E1 when the protection structure 6 is in the enabled state and the safety device 154A changes from the used state to the non-used state, when the protection structure 6 is in the disabled state and the safety device 154A changes from the non-used state to the used state, when the safety device 154A is in the used state and the protection structure 6 changes from the enabled state to the disabled state, or when the safety device 154A is in the non-used state and the protection structure 6 changes from the disabled state to the enabled state.

With this configuration, the working machine 1 does not operate when the protection structure 6 is in the enabled state and the safety device 154A changes from the used state to the non-used state, when the protection structure 6 is in the disabled state and the safety device 154A changes from the non-used state to the used state, when the safety device 154A is in the used state and the protection structure 6 changes from the enabled state to the disabled state, or when the safety device 154A is in the non-used state and the protection structure 6 changes from the disabled state to the enabled state, thus the safety of the operator can be ensured.

(Item A13) The working machine 1 according to item A12, further including a notifier 70 to provide a first notification asking to use the safety device 154A when the protection structure 6 is in the enabled state and the safety device 154A changes from the used state to the non-used state or when the safety device 154A is in the non-used state and the protection structure 6 changes from the disabled state to the enabled state, and provide a second notification asking to not use the safety device 154A when the protection structure 6 is in the disabled state and the safety device 154A changes from the non-used state to the used state or when the safety device 154A is in the used state and the protection structure 6 changes from the enabled state to the disabled state.

With this configuration, during operation of the prime mover E1, the notifier 70 can allow the operator to notice that not using the safety device 154A is unfavorable by providing the first notification (for example, lighting of the indicator 73) asking to use the safety device 154A when the protection structure 6 is in the enabled state and the safety device 154A changes from the used state to the non-used state or when the safety device 154A is in the non-used state and the protection structure 6 changes from the disabled state to the enabled state. Thus, during operation of the prime mover E1, the operator can quickly respond and use the safety device 154A. On the other hand, during operation of the prime mover E1, the notifier 70 can allow the operator to notice that use of the safety device 154A is unfavorable by providing the second notification (for example, blinking of the indicator 73) asking to not use the safety device 154A when the protection structure 6 is in the disabled state and the safety device 154A changes from the non-used state to the used state or when the safety device 154A is in the used state and the protection structure 6 changes from the enabled state to the disabled state. Thus, during operation of the prime mover E1, the operator can quickly respond and stop using the safety device 154A.

(Item A14) The working machine 1 according to any one of items A1 to A13, wherein the protection structure 6 includes a lower pipe 61 extending upward from the swivel body 2A, an upper pipe 62 located at an upper portion of the lower pipe 61, and a hinge portion 63 to support the upper pipe 62 rotatably relative to the lower pipe 61, the lower pipe 61 includes a first electric wire 611 located therein and a first supporting body 613 to support, at an upper end position (upper end) of the lower pipe 61, a first contact 612 connected to an end of the first electric wire 611, the upper pipe 62 includes a lighting apparatus 621, a second electric wire 622 located in the upper pipe 62 and having a first end connected to the lighting apparatus 621, and a second supporting body 624 to support, at a lower end position (lower end) of the upper pipe 62, a second contact 623 connected to a second end of the second electric wire 622, the hinge portion 63 rotatably supports the upper pipe 62 such that the upper pipe 62 is movable between (i) an upright position in which the lower end of the upper pipe 62 is coupled to the upper portion of the lower pipe 61 to position the upper pipe 62 upright and (ii) an inclined position in which the lower end of the upper pipe 62 is uncoupled from the upper portion of the lower pipe 61 to position the upper pipe 62 inclined, the enabled state is a state in which the upper pipe 62 is in the upright position, and the disabled state is a state in which the upper pipe 62 is in the inclined position, and the first contact 612 and the second contact 623 are configured to contact each other when the upper pipe 62 is in the upright position and not contact each other when the upper pipe 62 is in the inclined position.

With this configuration, the lower pipe 61 and the upper pipe 62 of the protection structure 6 are provided with, inside thereof, cables (the first electric wire 611 and the second electric wire 622) connected to an electrical apparatus (for example, the lighting apparatus 621) provided at the upper pipe 62, thus the lower pipe 61 and the upper pipe 62 can protect the cables, and the protection structure 6 can be made compact as compared to when the cables are guided in the longitudinal direction of the pipe outside the protection structure 6. In addition, when the protection structure 6 is moved between the enabled state (upright position of the upper pipe 62) and the disabled state (inclined position of the upper pipe 62), the operator does not need to perform work of connecting and disconnecting the first electric wire 611 in the lower pipe 61 and the second electric wire 622 in the upper pipe 62, thus this configuration is superior in convenience.

(Item A15) The working machine 1 according to any one of items A1 to A14, wherein the protection structure 6 includes a lower member 61A (e.g., lower pipe 61) extending upward from the swivel body 2A, an upper member 62A (e.g., upper pipe 62) located at an upper portion of the lower member 61A, and a hinge portion 63 to support the upper member 62A rotatably relative to the lower member 61A, the hinge portion 63 rotatably supports the upper member 62A such that the upper member 62A is movable between (i) an upright position in which a lower end of the upper member 62A is coupled to the upper portion of the lower member 61A to position the upper member 62A upright and (ii) an inclined position in which the lower end of the upper member 62A is uncoupled from the upper portion of the lower member 61A to position the upper member 62A inclined, the enabled state is a state in which the upper member 62A is in the upright position, and the disabled state is a state in which the upper member 62A is in the inclined position, and the first detector 80 includes a sensor portion 81 provided in or on one of the lower member 61A or the upper member 62A, and a detected portion 82 provided in or on the other of the lower member 61A or the upper member 62A and configured to be detected by the sensor portion 81.

With this configuration, the first detector 80 can suitably detect, by the sensor portion 81 and the detected portion 82, a state in which the upper member 62A (for example, the upper pipe 62) is in the upright position and a state in which the upper member 62A is in the inclined position with respect to the lower member 61A (for example, the lower pipe 61). Note that the lower member 61A and the upper member 62A are not limited to a pipe or tube, and may be an angle (angle iron, or steel angle) in a square-U shape or an L shape, or a support member such as H steel (H-shaped steel).

In the above-described example embodiments, the working machine 1 uses a configuration in which the first hydraulic pump P1, the second hydraulic pump P2 and the third hydraulic pump P3 are driven by the power of the prime mover E1. However, instead of or in addition to the prime mover E1, an electric or hybrid prime mover including a drive battery and an electric motor may be used. In this case, in the working machine 1, the electric motor can be driven by the electric power from the drive battery, the first hydraulic pump P1, the second hydraulic pump P2 and the third hydraulic pump P3 can be driven by the power of the electric motor, the hydraulic actuator (the boom cylinder C1, the bucket cylinder C2, the dozer cylinder C3, the swing cylinder C4, and the arm cylinder C9), the left traveling motor ML, the right traveling motor MR, and the swivel motor MT can be driven by the hydraulic fluid delivered from the first hydraulic pump P1 and the second hydraulic pump P2, and the working device 20 and the traveling device 10 can be driven by the hydraulic actuator (the boom cylinder C1, the bucket cylinder C2, the dozer cylinder C3, the swing cylinder C4, and the arm cylinder C9), the left traveling motor ML, the right traveling motor MR, and the swivel motor MT.

Alternatively, the working machine 1 may adopt a configuration in which part or all of the actuators included in the working device 20 and the traveling device 10 include electric actuators, the electric actuators are driven by the electric power of the battery, and the working device 20 and the traveling device 10 are driven by the power of the electric actuators. For example, in addition to the configuration in which all actuators are electric actuators, a configuration may be adopted in which the working machine 1 includes at least one of an electric motor to drive a hydraulic pump or an electric swivel motor.

In the above-described example embodiments, the working machine 1 is a model having a swing function, but may be a model not including a swing device (swing cylinder C4), in other words, a model (such as an ultra-small swing excavator) having no swing function. Alternatively, the working machine 1 may comply with two-piece boom specifications regardless of whether or not a swing function is provided.

In the above-described example embodiments, an example in which the present invention is applied to the working machine 1 such as a backhoe has been described. However, the application target of the present invention is not limited to this, and the present invention may be applied to another construction machine such as a wheel loader, a compact track loader, and a skid-steer loader.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
a traveling device (10);
a swivel body (2A) to be supported on the traveling device (10) such that the swivel body (2A) is turnable about a vertical axis;
an operator's seat (4) provided on the swivel body (2A);
a protection structure (6) movable between an enabled state in which the protection structure (6) is enabled to protect an operator sitting in the operator's seat (4), and a disabled state other than the enabled state; and
a first detector (80) to detect the enabled state and the disabled state of the protection structure (6).

2. The working machine (1) according to claim 1, further comprising a controller (51) configured or programmed to control an operation of the working machine (1); wherein
the controller (51) is configured or programmed to limit the operation of the working machine (1) based on a detection result from the first detector (80).

3. The working machine (1) according to claim 2, further comprising:
a safety device (154A) to keep the operator in the operator's seat (4); and
a second detector (90) to detect a used state and a non-used state of the safety device (154A); wherein
the controller (51) is configured or programmed to limit the operation of the working machine (1) based on the detection result from the first detector (80) and a detection result from the second detector (90).

4. The working machine (1) according to claim 3, wherein the controller (51) is configured or programmed to prohibit the operation of the working machine (1) when the protection structure (6) is in the enabled state and the safety device (154A) is in the non-used state.

5. The working machine (1) according to claim 3, wherein the controller (51) is configured or programmed to not prohibit the operation of the working machine (1) when the protection structure (6) is in the disabled state and the safety device (154A) is in the non-used state.

6. The working machine (1) according to claim 4, wherein the controller (51) is configured or programmed to prohibit the operation of the working machine (1) when the protection structure (6) is in the disabled state and the safety device (154A) is in the used state.

7. The working machine (1) according to claim 6, further comprising a notifier (70) to provide a first notification asking to use the safety device (154A) when the protection structure (6) is in the enabled state and the safety device (154A) is in the non-used state, and provide a second notification asking to not use the safety device (154A) or to enable the protection structure (6) when the protection structure (6) is in the disabled state and the safety device (154A) is in the used state.

8. The working machine (1) according to claim 4 or 6, further comprising:
a working device (20) provided on the swivel body (2A); and
a prime mover (E1) to supply the traveling device (10) and the working device (20) with power; wherein
the prohibiting the operation of the working machine (1) by the controller (51) includes prohibiting driving of the prime mover (E1).

9. The working machine (1) according to claim 4 or 6, further comprising:
a working device (20) provided on the swivel body (2A);
a prime mover (E1) to supply the traveling device (10) and the working device (20) with power; and
a hydraulic pump (P) to be driven by power from the prime mover (E1); wherein
the traveling device (10) and the working device (20) are configured to be driven based on hydraulic fluid from the hydraulic pump (P); and
the controller (51) is configured or programmed to stop supply of hydraulic fluid from the hydraulic pump (P) to the traveling device (10) and the working device (20).

10. The working machine (1) according to claim 8, wherein the controller (51) is configured or programmed to, upon receipt of an instruction to start the prime mover (E1):
start the prime mover (E1) when the protection structure (6) is in the enabled state and the safety device (154A) is in the used state or when the protection structure (6) is in the disabled state and the safety device (154A) is in the non-used state; and
not start the prime mover (E1) when the protection structure (6) is in the enabled state and the safety device (154A) is in the non-used state or when the protection structure (6) is in the disabled state and the safety device (154A) is in the used state.

11. The working machine (1) according to claim 10, further comprising a notifier (70) to provide a first notification asking to use the safety device (154A) when the protection structure (6) is in the enabled state and the safety device (154A) is in the non-used state, and provide a second notification asking to not use the safety device (154A) when the protection structure (6) is in the disabled state and the safety device (154A) is in the used state.

12. The working machine (1) according to claim 8, wherein the controller (51) is configured or programmed to, while the prime mover (E1) is operating, stop the prime mover (E1) when the protection structure (6) is in the enabled state and the safety device (154A) changes from the used state to the non-used state, when the protection structure (6) is in the disabled state and the safety device (154A) changes from the non-used state to the used state, when the safety device (154A) is in the used state and the protection structure (6) changes from the enabled state to the disabled state, or when the safety device (154A) is in the non-used state and the protection structure (6) changes from the disabled state to the enabled state.

13. The working machine (1) according to claim 12, further comprising a notifier (70) to:
provide a first notification asking to use the safety device (154A) when the protection structure (6) is in the enabled state and the safety device (154A) changes from the used state to the non-used state or when the safety device (154A) is in the non-used state and the protection structure (6) changes from the disabled state to the enabled state; and
provide a second notification asking to not use the safety device (154A) when the protection structure (6) is in the disabled state and the safety device (154A) changes from the non-used state to the used state or when the safety device (154A) is in the used state and the protection structure (6) changes from the enabled state to the disabled state.

14. The working machine (1) according to claim 1, wherein
the protection structure (6) includes a lower pipe (61) extending upward from the swivel body (2A), an upper pipe (62) located at an upper portion of the lower pipe (61), and a hinge portion (63) to support the upper pipe (62) rotatably relative to the lower pipe (61);
the lower pipe (61) includes a first electric wire (611) located therein and a first supporting body (613) to support, at an upper end position of the lower pipe (61), a first contact (612) connected to an end of the first electric wire (611);
the upper pipe (62) includes a lighting apparatus (621), a second electric wire (622) located in the upper pipe (62) and having a first end connected to the lighting apparatus (621), and a second supporting body (624) to support, at a lower end position of the upper pipe (62), a second contact (623) connected to a second end of the second electric wire (622);
the hinge portion (63) rotatably supports the upper pipe (62) such that the upper pipe (62) is movable between (i) an upright position in which the lower end of the upper pipe (62) is coupled to the upper portion of the lower pipe (61) to position the upper pipe (62) upright and (ii) an inclined position in which the lower end of the upper pipe (62) is uncoupled from the upper portion of the lower pipe (61) to position the upper pipe (62) inclined;
the enabled state is a state in which the upper pipe (62) is in the upright position, and the disabled state is a state in which the upper pipe (62) is in the inclined position; and
the first contact (612) and the second contact (623) are configured to contact each other when the upper pipe (62) is in the upright position and not contact each other when the upper pipe (62) is in the inclined position.

15. The working machine (1) according to claim 1, wherein
the protection structure (6) includes a lower member (61A) extending upward from the swivel body (2A), an upper member (62A) located at an upper portion of the lower member (61A), and a hinge portion (63) to support the upper member (62A) rotatably relative to the lower member (61A);
the hinge portion (63) rotatably supports the upper member (62A) such that the upper member (62A) is movable between (i) an upright position in which a lower end of the upper member (62A) is coupled to the upper portion of the lower member (61A) to position the upper member (62A) upright and (ii) an inclined position in which the lower end of the upper member (62A) is uncoupled from the upper portion of the lower member (61A) to position the upper member (62A) inclined;
the enabled state is a state in which the upper member (62A) is in the upright position, and the disabled state is a state in which the upper member (62A) is in the inclined position; and
the first detector (80) includes a sensor portion (81) provided in or on one of the lower member (61A) or the upper member (62A), and a detected portion (82) provided in or on the other of the lower member (61A) or the upper member (62A) and configured to be detected by the sensor portion (81).
